# EUROPÄISCHE PATENTSCHRIFT

(11) **EP 1 152 811 B1**
(45) Veröffentlichungstag und Bekanntmachung des Hinweises auf die Patenterteilung: **07.04.2004**
(21) Anmeldenummer: 00903622.9
(22) Anmeldetag: 25.01.2000
(51) Int. Cl.: B01D 19/04, D21H 21/12, D21H 17/09

(54) **ENTSCHÄUMER UND/ODER ENTLÜFTER AUF DER BASIS VON ÖL-IN-WASSER-DISPERSIONEN**
DEFOAMER AND/OR DEAERATOR ON THE BASIS OF OIL-IN-WATER DISPERSIONS
ANTIMOUSSES ET/OU DESAERATEURS A BASE DE DISPERSIONS HUILE DANS EAU

(30) Priorität: 29.01.1999 DE 19903546
(43) Veröffentlichungstag der Anmeldung: 14.11.2001
(73) Patentinhaber: BASF AKTIENGESELLSCHAFT, 67056 Ludwigshafen (DE)
(72) Erfinder: DYLLICK-BRENZINGER, Rainer, D-69469 Weinheim (DE); GUENTHER, Erhard, D-67454 Hassloch (DE); LORENCAK, Primoz, D-67069 Ludwigshafen (DE); GLAS, Günther, D-67149 Meckenheim (DE); BONN, Johann, D-67258 Hessheim (DE)
(86) Internationale Anmeldenummer: PCT/EP2000/000535
(87) Internationale Veröffentlichungsnummer: WO 2000/044470

(56) Entgegenhaltungen:
- EP-A- 0 531 713
- EP-A- 0 662 172
- EP-A- 0 732 134
- WO-A-91/08034
- DE-A- 2 228 217
- DE-A- 2 851 832

## Beschreibung

Die Erfindung betrifft Entschäumer und/oder Entlüfter auf der Basis von Ö1-in-Wasser-Dispersionen, die in der hydrophoben Öl-Phase mindestens eine als Entschäumer und/oder Entlüfter wirksame Verbindung und gegebenenfalls weitere Bestandteile enthalten.

Aus der EP-A-0 149 812 sind Entschäumer auf der Basis von Öl-inwasser-Emulsionen bekannt, die 0,05 bis 5 Gew.-% eines hochmolekularen, wasserlöslichen Homo- oder Copolymerisates von Acrylsäure, Methacrylsäure, Acrylamid oder Methacrylamid als Stabilisator enthalten. Die Ölphase der Emulsionen enthält beispielsweise als entschäumend wirkende Verbindungen einen C₁₂-C₂₆-Alkohol, Destillationsrückstände, die bei der Herstellung von Alkoholen mit einer höheren Kohlenstoffzahl durch Oxosynthese oder nach dem Ziegler-Verfahren erhalten werden und die gegebenenfalls noch alkoxyliert sind. Weitere entschäumend wirkende Substanzen sind beispielsweise Fettsäureester von C₁₂-C₂₂-Carbonsäuren mit einem 1- bis 3-wertigen C₁- bis C₁₈-Alkohol und/oder Kohlenwasserstoffe mit einem Siedepunkt oberhalb von 200°C oder Fettsäuren mit 12 bis 22 C-Atomen. Der mittlere Teilchendurchmesser der Ölphase der Öl-in-Wasser-Emulsionen beträgt 0,5 bis 15 µm.

Aus der DE-A-30 01 387 sind wäßrige emulgatorhaltige Öl-in-Wasser-Emulsionen bekannt, die höherschmelzende aliphatische Alkohole und bei Raumtemperatur flüssige Kohlenwasserstoffe enthalten. Die Ölphase der Öl-in-Wasser-Emulsionen kann gegebenenfalls noch weitere als Entschäumer wirkende Komponenten enthalten, z.B. höherschmelzende nichtaromatische Kohlenwasserstoffe, Fettsäuren oder deren Derivate, wie beispielsweise Fettsäureester, Bienenwachs, Karnaubawachs, Japanwachs und Montanwachs.

Aus der EP-A-0 531 713 sind Entschäumer auf der Basis von Öl-in-Wasser-Emulsionen bekannt, deren Öl-Phase einen Alkohol mit mindestens 12 C-Atomen, Fettsäureester aus Alkoholen mit mindestens 22 C-Atomen und C₁- bis C₃₆-Carbonsäuren, oder Fettsäureester von C₁₂- bis C₂₂-Carbonsäuren mit 1- bis 3-wertigen C₁- bis C₁₈-Alkoholen oder einen Kohlenwasserstoff mit einem Siedepunkt oberhalb von 200°C bzw. Fettsäuren mit 12 bis 22 C-Atomen in Kombination mit Polyglycerinestern enthält, die durch eine mindestens 20 %ige Veresterung von Polyglycerinmischungen mit mindestens einer Fettsäure mit 12 bis 36 C-Atomen erhältlich sind. Auch diese Öl-in-Wasser-Emulsionen sind mit Hilfe eines wasserlöslichen Emulgators stabilisiert.

Aus der EP-A-0 662 172 sind Entschäumer auf der Basis von Öl-in-Wasser-Emulsionen bekannt, die beispielsweise in Papierfabriken als Entschäumer eingesetzt werden und die auch bei höheren Temperaturen der Wasserkreisläufe noch ausreichend wirksam sind. Solche Entschäumer enthalten in der Ölphase
(a) Fettsäureester aus C₁₂- bis C₂₂-Carbonsäuren mit 1- bis 3-wertigen C₁- bis C₂₂-Alkoholen.
(b) Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind und
(c) Fettsäureester aus C₁₂- bis C₂₂-Carbonsäuren und Polyalkylenglykolen, wobei die Molmasse der Polyalkylenglykole bis zu 5000 g/mol beträgt. Die hydrophobe Phase kann gegebenenfalls weitere Bestandteile wie Alkohole mit mindestens 12 C-Atomen oder Kohlenwasserstoffe mit einem Siedepunkt oberhalb von 200°C enthalten. Diese Öl-in-Wasser-Emulsionen sind ebenfalls mit Hilfe eines Emulgators stabilisiert.

Aus der EP-A-0 696 224 sind wäßrige Antischaummitteldispersionen bekannt, deren dispergierte Phase Fettalkohole mit Schmelzpunkten über 40°C und Ketone mit Schmelzpunkten über 45°C sowie gegebenenfalls natürliche oder synthetische Wachse mit Schmelzpunkten über 50°C enthält.

Aus der EP-A-0 732 134 sind Entschäumer und/oder Entlüfter auf Basis von Öl-in-Wasser-Emulsionen für wäßrige, zur Schaumbildung neigende Medien bekannt, wobei die Öl-Phase der Emulsionen
(a) mindestens einen Alkohol mit mindestens 12 C-Atomen, Destillationsrückstände, die bei der Herstellung von Alkoholen mit einer höheren Kohlenstoffzahl durch Oxosynthese oder nach dem Ziegler-Verfahren erhältlich sind, oder Mischungen der genannten Verbindungen und
(b) mindestens einen Ester aus einem Zuckeralkohol mit mindestens 4 OH-Gruppen oder mindestens 2 OH-Gruppen und mindestens einer intramolekularen Etherbindung und einer Fettsäure mindestens 20 C-Atomen im Molverhältnis 1 zu mindestens 1 enthält, wobei die freien OH-Gruppen dieser Ester gegebenenfalls mit C₁₂- bis C₁₈-Carbonsäuren ganz oder teilweise verestert sind.

Die hydrophobe Phase kann gegebenenfalls weitere entschäumend wirkende Verbindungen wie Fettsäureester aus Alkoholen mit mindestens 22 C-Atomen und C₁- bis C₃₆-Carbonsäuren, Polyethylenwachse, natürliche Wachse, Kohlenwasserstoffe mit einem Siedepunkt oberhalb von 200°C oder Fettsäuren mit 12 bis 22 C-Atomen enthalten.

Aus der nicht vorveröffentlichten DE-A-19835968.3 sind Entschäumer und/oder Entlüfter auf der Basis von Öl-in-Wasser-Dispersionen bekannt, die in der hydrophoben Öl-Phase mindestens eine als Entschäumer und/oder Entlüfter wirksame Verbindung und gegebenenfalls weitere Bestandteile enthalten und die mit Hilfe von 0,01 bis 3 Gew.-%, bezogen auf die Ölphase eines Säuregruppen aufweisenden wasserlöslichen, amphiphilen Copolymerisats oder eines wasserlöslichen Salzes davon stabilisiert sind. Aus der DE-A-19641076 sind Entschäumer bekannt, die sowohl als Ölentschäumer als auch in Form eines Emulsionsentschäumers in der Papierindustrie verwendet werden. Die Ölphase der Entschäumer enthält als wirksame Bestandteile Reaktionsprodukte, die beispielsweise durch Umsetzung von Mono- oder Diglyceriden mit Dicarbonsäuren und/oder deren Methyl- und/oder Ethylestern erhältlich sind.

Der vorliegenden Erfindung liegt die Aufgabe zugrunde, neue Entschäumer und/oder Entlüfter auf der Basis von Öl-in-Wasser-Dispersionen zur Verfügung zu stellen.

Die Aufgabe wird erfindungsgemäß gelöst mit Entschäumern und/oder Entlüftern auf der Basis von Öl-in-Wasser-Dispersionen, die in der dispergierten hydrophoben Phase mindestens eine als Entschäumer und/oder Entlüfter wirksame Verbindung und gegebenenfalls weitere Bestandteile enthalten, wenn die Ölphase 3-Thiaalkan-1-ole, 3-Thiaoxid-alkan-1-ole, 3-Thiadioxid-alkan-1-ole Ester der genannten Verbindungen oder deren Mischungen als entschäumend und/oder entlüftend wirksame Verbindungen enthält.

Gegenstand der Erfindung ist außerdem die Verwendung von 3-Thiaalkan-1-olen, 3-Thiaoxid-alkan-1-olen, 3-Thiadioxid-alkan-1-olen, Ester der genannten Verbindungen oder deren Mischungen als entschäumend und/oder entlüftend wirkende Komponenten in Entschäumern und/oder Entlüftern auf der Basis von Öl-in-Wasser-Dispersionen.

3-Thiaalkan-1-ole erhält man durch Umsetzung von α-Olefinen mit Mercaptoalkoholen. Die Addition der Thiolfunktion der Mercaptoalkohole erfolgt in Gegenwart von Sauerstoff oder Verbindungen, die unter den Reaktionsbedingungen (z.B. 80 bis 120°C) Radikale bilden, wie Peroxide, Hydroperoxide oder Azoverbindungen wie Azobisisobutyronitril. Die Addition der Thioetherfettalkohole an α-Olefine verläuft radikalisch mit Anti-Markovnikov-Orientierung, vgl.

Angew. Chem., Bd. 82, 276-290 (1970), nach folgendem Schema 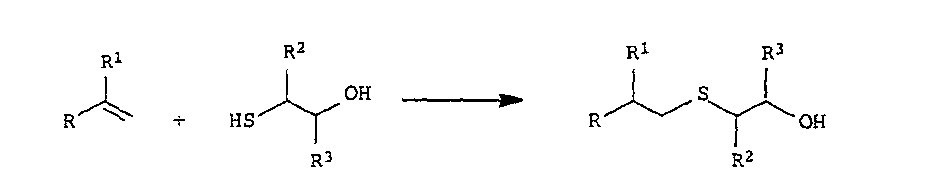 wobei
- R =: C₈- bis C₃₀-Alkyl und
- R¹ =: H, C₁- bis C₅-Alkyl, vorzugsweise CH₃ und Phenyl,
- R², R³ =: H, CH₃, C₂H₅ und Phenyl bedeuten.

Die in der Literatur beschriebenen Umsetzungsprodukte von α-Olefinen mit Mercaptoethanol werden beispielsweise zur Herstellung von Tensiden (vgl. US-A-4 040 781) oder in hydraulischen Flüssigkeiten (vgl. US-A-4 031 023) verwendet. Aus den 3-Thiaalkan-1-olen erhält man beispielsweise durch Oxidation mit wasserstoffperoxid, PhICl₂, NaIO₄, t-BuOCl, Kaliumpermanganat, Wolframsäuren oder Persäuren (z.B. Peressigsäure oder Perbenzoesäure) die entsprechenden 3-Thiaoxid-alkan-1-ole.

3-Thiadioxid-alkan-1-ole sind ebenfalls aus den 3-Thiaalkan-1-olen durch Oxidation mit den genannten Oxidationsmitteln erhältlich, wobei man jedoch unter anderen Reaktionsbedingungen arbeitet, z.B. erhöht man die Konzentration des Oxidationsmittels und die Temperatur, bei der die Oxidation durchgeführt wird.

Aus den 3-Thiaalkan-1-olen, den 3-Thiaoxid-alkan-1-olen bzw, den 3-Thiadioxidalkan-1-olen erhält man die entsprechenden Ester durch Veresterung mit Säuren. Man kann beispielsweise Ester der Phosphorsäure, Schwefelsäure oder Kohlensäure als auch Ester organischer Säuren herstellen, z.B. Ester der Thiaverbindungen mit C₁- bis C₃₀-Carbonsäuren, Phosphonsäuren oder Sulfonsäuren. Außer Monocarbonsäuren eignen sich auch Di- und Polycarbonsäuren wie Adipinsäure, Weinsäure und Citronensäure. Besonders bevorzugte Komponenten für die erfindungsgemäßen Entschäumer sind C₁₆- bis C₂₄-Carbonsäuren wie Palmitinsäure, Ölsäure, Stearinsäure und Behensäure.

3-Thiaalkan-1-ole, 3-Thiaoxid-alkan-1-ole, 3-Thiadioxid-alkan-1-ole, Ester der genannten Verbindungen oder deren Mischungen können entweder allein oder in Kombination mit bekannten, als Entschäumer und/oder Entlüfter wirksamen Verbindungen die hydrophobe Phase von Entschäumern und/oder Entlüftern bilden. Die hydrophobe Phase von erfindungsgemäßen Entschäumern und/oder Entlüftern kann beispielsweise folgende Komponenten enthalten:
(a) 3-Thiaalkan-1-ole, 3-Thiaoxid-alkan-1-ole, 3-Thiadioxidalkan-1-ole, Ester der genannten Verbindungen oder deren Mischungen und
(b) mindestens eine Verbindung aus der Gruppe der Glycerinester von Fettsäuren mit mindestens 10 C-Atomen im Molekül, C₁₂- bis C₃₀-Alkohole, alkoxylierte Alkohole, Ester aus Zuckeralkoholen mit mindestens 4 OH-Gruppen oder mindestens 2 OH-Gruppen und mindestens einer intramolekularen Etherbindung und einer Fettsäure mit mindestens 20 C-Atomen im Molekül, Fettsäureester von C₁₂- bis C₂₂-Carbonsäuren mit 1- bis 3-wertigen Alkoholen, Ketone mit Schmelzpunkten oberhalb von 45°C, der Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind, Umsetzungsprodukte von Mono- und Diglyceriden mit Dicarbonsäuren, mit mindestens einer C₁₂- bis C₃₆-Fettsäure veresterte Umsetzungsprodukte von Glycerin mit Dicarbonsäuren, Polyethylenwachse, natürliche Wachse, Kohlenwasserstoffe mit Siedepunkten oberhalb von 200°C, feinteiligen inerten Feststoffen und Mischungen der genannten Verbindungen.

Bevorzugt sind Entschäumer und/oder Entlüfter, deren Ölphase
(a) 3-Thiaalkan-1-ole, 3-Thiaoxid-alkan-1-ole, 3-Thiadioxidalkan-1-ole, Carbonsäureester der genannten Verbindungen oder deren Mischungen,
(b1) Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind, und
(b2) Glycerinester von Fettsäuren mit mindestens 10 C-Atomen im Molekül, C₁₂- bis C₃₀-Alkohole, alkoxylierte Alkohole, Ester aus Zuckeralkoholen mit mindestens 4 OH-Gruppen oder mindestens 2 OH-Gruppen und mindestens einer intramolekularen Etherbindung und einer Fettsäure mit mindestens 20 C-Atomen im Molekül, Fettsäureester von C₁₂- bis C₂₂-Carbonsäuren mit 1- bis 3-wertigen Alkoholen, Ketone mit Schmelzpunkten oberhalb von 45°C, Umsetzungsprodukte von Mono- und Diglyceriden mit Dicarbonsäuren, mit mindestens einer C₁₂- bis C₃₆-Fettsäure veresterte Umsetzungsprodukte von Glycerin mit Dicarbonsäuren, Polyethylenwachse, natürliche wachse, Kohlenwasserstoffe mit Siedepunkten oberhalb von 200°C, feinteilige inerte Feststoffe und Mischungen der genannten Verbindungen enthält.

Die hydrophobe Phase der Entschäumer und/oder Entlüfter enthält als Komponente (a) z.B. 1 bis 100 Gew.-% eines 3-Thiaalkan-1-ols, 3-Thiaoxid-alkan-1-ols, 3-Thiadioxid-alkan-1-ols, eines Esters der genannten Verbindungen oder deren Mischungen. Die hydrophobe Phase der Entschäumer und/oder Entlüfter enthält vorzugsweise 5 bis 75 Gew.-% eines 3-Thia-C₁₆- bis C₃₀-alkan-1-ols, 3-Thiaoxid-C₁₆- bis C₃₀-alkan-1-ols, 3-Thiadioxid-C₁₆-bis C₃₀-alkan-1-ols oder deren Mischungen. Besonders bevorzugt sind solche Entschäumer und/oder Entlüfter, deren hydrophobe Phase 5 bis 85 Gew.-% eines 3-Thia-C₁₈- bis C₂₈-alkan-1-ols enthält. Die.Verbindungen der Komponente (b) sind zu 25 bis 95, vorzugsweise 30 bis 95 Gew.-% am Aufbau der Ölphase beteiligt. Bei den bevorzugt in Betracht kommenden Entschäumern beträgt der Anteil der Komponente (b1) 2 bis 20 und der der Komponente (b2) 13 bis 75 Gew.-%.

Die Komponente (b) der Entschäumer und/oder Entlüfter umfaßt alle Verbindungen, die als Entschäumer und/oder Entlüfter bekannt sind. Beispiele hierfür sind Glycerinester von Fettsäuren, mit mindestens 10 C-Atomen im Molekül. Weitere geeignete Verbindungen sind C₁₂- bis C₃₀-Alkohole wie Myristylalkohol, Cetylalkohol, Stearylalkohol, Palmitylalkohol, Talgfettalkohol und Behenylalkohol, sowie synthetisch hergestellte Alkohole, beispielsweise nach dem Ziegler-Verfahren durch Oxidation von Aluminiumalkylen erhältliche gesättigte, geradkettige, unverzweigte Alkohole. Synthetische Alkohole werden auch durch Oxosynthese erhalten. Hierbei handelt es sich in der Regel um Alkoholgemische. Die Alkohole können beispielsweise bis zu 48 C-Atome im Molekül enthalten. Sehr wirksame Entschäumer enthalten beispielsweise Mischungen aus mindestens einem C₁₂- bis C₂₆-Alkohol und mindestens einem Fettalkohol mit 28 bis 48 C-Atomen im Molekül, vgl. EP-A-0 322 830. Anstelle der reinen Alkohole können als entschäumend wirkende Verbindungen auch Destillationsrückstände einer höheren Kohlenstoffzahl durch Oxosynthese oder nach dem Ziegler-Verfahren erhältlich sind. weitere Verbindungen, die als Entschäumer und/oder Entlüfter in Betracht kommen, sind alkoxylierte Alkohole sowie alkoxylierte Destillationsrückstände, die bei der Herstellung von Alkoholen durch Oxosynthese oder nach dem Ziegler-Verfahren anfallen. Die alkoxylierten Verbindungen sind dadurch erhältlich, daß man die langkettigen Alkohole bzw. Destillationsrückstände mit Ethylenoxid oder mit Propylenoxid oder auch mit einer Mischung aus Ethylenoxid und Propylenoxid umsetzt. Hierbei kann man zunächst Ethylenoxid und anschließend Propylenoxid an die Alkohole oder die Destillationsrückstände anlagern oder man addiert zunächst Propylenoxid und danach Ethylenoxid. Pro OH-Gruppe des Alkohols lagert man meistens bis zu 5 mol Ethylenoxid bzw. Propylenoxid an. Besonders bevorzugt aus der Gruppe der alkoxylierten Verbindungen sind solche Reaktionsprodukte, die durch Addition von 1 oder 2 mol Ethylenoxid an 1 mol Fettalkohol bzw. Destillationsrückstand hergestellt werden.

Die obengenannten Fettalkohole mit mindestens 12 C-Atomen im Molekül werden meistens zusammen mit anderen ebenfalls als Entschäumer wirkenden Verbindungen eingesetzt. Solche Verbindungen sind beispielsweise Fettsäureester von C₁₂- bis C₂₂-Carbonsäuren mit 1- bis 3-wertigen C₁-C₁₈-Alkoholen. Die Fettsäuren, die diesen Estern zugrundeliegen, sind beispielsweise Laurinsäure, Myristinsäure, Palmitinsäure, Stearinsäure, Arachinsäure und Behensäure. Vorzugsweise verwendet man Palmitinsäure oder Stearinsäure. Man kann einwertige C₁- bis C₁₈-Alkohole zur Veresterung der genannten Carbonsäuren verwenden, z.B. Methanol, Ethanol, Propanol, Butanol, Hexanol, Dodecanol und Stearylalkohol oder auch zweiwertige Alkohole einsetzen wie Ethylenglykol oder 3-wertige Alkohole, z.B. Glycerin. Die mehrwertigen Alkohole können vollständig oder auch nur teilweise verestert sein.

Weitere entschäumend und entlüftend wirkende Verbindungen sind Polyglycerinester. Solche Ester werden beispielsweise dadurch hergestellt, daß man Polyglycerine, die mindestens 2 Glycerineinheiten enthalten, mit mindestens einer C₁₂- bis C₃₆-Carbonsäure verestert. Die den Estern zugrundeliegenden Polyglycerine werden soweit verestert, daß Verbindungen entstehen, die in Wasser praktisch nicht mehr löslich sind. Die Polyglycerine erhält man beispielsweise durch alkalisch katalysierte Kondensation von Glycerin bei höheren Temperaturen oder durch Umsetzung von Epichlorhydrin mit Glycerin in Gegenwart von sauren Katalysatoren. Die Polyglycerine enthalten üblicherweise mindestens 2 bis etwa 30, vorzugsweise 2 bis 12 Glycerin-Einheiten. Handelsübliche Polyglycerine enthalten Mischungen aus polymeren Glycerinen, z.B. Mischungen aus Diglycerin, Triglycerin, Tetraglycerin, Pentaglycerin und Hexaglycerin und gegebenenfalls höher kondensierten Polyglycerinen. Der Veresterungsgrad der OH-Gruppen der Polyglycerine beträgt mindestens 20 bis 100, vorzugsweise 60 bis 100 %. Die zur Veresterung verwendeten langkettigen Fettsäuren können gesättigt oder auch ethylenisch ungesättigt sein. Geeignete Fettsäuren sind beispielsweise Laurinsäure, Myristinsäure, Palmitinsäure, Stearinsäure, Arachinsäure, Behensäure, Ölsäure, Hexadecensäuren, Elaidinsäure, Eicosensäuren, Docosensäuren wie Erucasäure oder mehrfach ungesättigte Säuren wie Octadecendiensäuren und Octadecentriensäuren, z.B. Linolsäure und Linolensäure sowie Mischungen der genannten Carbonsäuren. Als Entschäumer geeignete Ester von Polyglycerinen sind beispielsweise in der EP-A-0 662 172 beschrieben.

Andere als Entschäumer und/oder Entlüfter für wäßrige, zur Schaumbildung neigende Medien geeignete Verbindungen, die entweder allein oder zusammen mit mindestens einem Alkohol mit mindestens 12 C-Atomen eingesetzt werden, sind Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molekül im Molverhältnis 1 zu mindestens 1, wobei die freien OH-Gruppen dieser Ester gegebenenfalls mit C₁₂- bis C₁₈-Carbonsäuren teilweise oder ganz verestert sind. Vorzugsweise verwendet man Ester aus Tetriten, Pentiten und/oder Hexiten mit mindestens 22 C-Atome aufweisenden Fettsäuren im Molverhältnis 1 zu mindestens 1,9. Besonders bevorzugt werden Ester aus Mannit und/oder Sorbit mit Behensäure im Molverhältnis von 1 zu mindestens 1, vorzugsweise 1 zu mindestens 1,9 eingesetzt. Außer den in Betracht kommenden Zuckeralkoholen Sorbit und Mannit eignen sich Adonit, Arabit, Xylit, Dulcit, Pentaerythrit, Sorbitan und Erythrit. Unter Zuckeralkoholen werden die aus Monosacchariden durch Reduktion der Carbonylfunktion entstehenden Polyhydroxyverbindungen verstanden, die selbst keine Zucker sind. Man kann auch die Anhydro-Verbindungen einsetzen, die aus Zuckeralkoholen durch intramolekulare Wasserabspaltung entstehen. Besonders wirksame Entschäumer und/oder Entlüfter erhält man wenn Zuckeralkohole mit C₂₂- bis C₃₀-Fettsäuren verestert werden. Sofern man die Zuckeralkohole nur teilweise mit einer mindestens 20 C-Atome enthaltenden Fettsäure verestert, kann man die nicht veresterten OH-Gruppen des Zuckeralkohols mit einer anderen Carbonsäure verestern, z.B. eine C₁₂bis C₁₈-Carbonsäure einsetzen. Ester dieser Art werden in der EP A-0 732 134 beschrieben.

Weitere als Entschäumer und/oder Entlüfter geeignete Verbindungen sind Ketone mit Schmelzpunkten oberhalb von 45°C. Sie werden meistens zusammen mit Fettalkoholen eingesetzt, deren Schmelzpunkte bei Temperaturen oberhalb von 40°C liegen. Solche Entschäumermischungen sind aus der zum Stand der Technik genannten EP A-0 696 224 bekannt. Außerdem eignen sich die aus der DE-A 196 41 076 bekannten Umsetzungsprodukte von z.B. Mono- und/oder Diglyceriden mit Dicarbonsäuren sowie mit mindestens einer C₁₂- bis C₃₆-Fettsäure veresterten Umsetzungsprodukte von Glycerin mit Dicarbonsäuren als Zusatz zur hydrophoben Phase der erfindungsgemäßen Entschäumer und/oder Entlüfter.

Andere Verbindungen, die die Wirksamkeit von langkettigen Alkoholen als Entschäumer verstärken und daher auch in Entschäumermischungen eingesetzt werden, sind beispielsweise Polyethylenwachse mit einer Molmasse von mindestens 2000 sowie natürliche Wachse wie Bienenwachs oder Carnaubawachs.

Ein weiterer Bestandteil von Entschäumermischungen sind Kohlenwasserstoffe mit einem Siedepunkt oberhalb von 200°C (bestimmt bei Normaldruck). Bevorzugt eingesetzte Kohlenwasserstoffe sind Paraffinöle, z.B. die im Handel üblichen Paraffingemische, die auch als Weißöl bezeichnet werden. Außerdem kommen Paraffine in Betracht, deren Schmelzpunkt beispielsweise oberhalb von 50°C liegt.

Die oben genannten als Entschäumer und/oder Entlüfter wirksamen Verbindungen werden entweder allein oder in Mischung untereinander zur Herstellung von Entschäumer- und Entlüfterdispersionen eingesetzt. Sie können in jedem beliebigen Verhältnis miteinander gemischt werden. Das Mischen der Verbindungen und auch das Einemulgieren in Wasser erfolgt bei höheren Temperaturen. Die wirksamen Komponenten, die die Ölphase der Entschäumermischung bilden, werden beispielsweise auf Temperaturen oberhalb von 40°C, z.B. 70 bis 120°C erhitzt und unter Einwirkung von Scherkräften in Wasser emulgiert, so daß man Öl-in-Wasser-Emulsionen erhält. Hierfür verwendet man handelsübliche Vorrichtungen. Die Teilchengröße der dispergierten hydrophoben Phase beträgt beispielsweise meistens 0,4 bis 15 µm und 0,2 bis 40 µm, vorzugsweise 0,5 bis 5 µm. Die so erhaltenen feinteiligen Öl-in-Wasser-Emulsionen werden beispielsweise mit Säuregruppen aufweisenden, wasserlöslichen, amphiphilen Copolymerisaten oder deren wasserlöslichen Salzen stabilisiert. Hierbei kann man beispielsweise so vorgehen, daß man zu der Öl-in-Wasser-Emulsion direkt nach dem Homogenisieren 0,01 bis 3 Gew.-%, bezogen auf die gesamte Emulsion, eines Säuregruppen aufweisenden, wasserlöslichen amphiphilen Copolymerisats oder eines wasserlöslichen Salzes davon zusetzt oder, daß man die als Entschäumer und/oder Entlüfter wirkenden Verbindungen in einer wäßrigen Lösung eines Säuregruppen aufweisenden, wasserlöslichen, amphiphilen Copolymerisats oder eines Salzes davon emulgiert. Man erhält auf diese Weise nach dem Abkühlen auf Raumtemperatur lagerstabile Dispersionen. Die in Wasser dispergierte organische Phase ist zu beispielsweise 5 bis 50, vorzugsweise 10 bis 35 Gew.-% am Aufbau der Öl-in-wasser-Dispersionen beteiligt.

Nach dem Abkühlen auf Raumtemperatur wird die in Wasser emulgierte Ölphase fest, so daß man Dispersionen erhält, die lagerstabil sind.

Die erfindungsgemäßen Ö1-in-Wasser-Dispersionen können gegebenenfalls feinteilige, praktisch wasserunlösliche, inerte Feststoffe mit Teilchengrößen <20 µm, vorzugsweise 0,1 bis 10 µm in einer Menge von beispielsweise 0,1 bis 50, vorzugsweise 1 bis 35 % des Gewichts der Ölphase der Öl-in-Wasser-Dispersionen enthalten. Geeignete inerte Feststoffe sind z.B. Kaolin, Kreide, Bentonit, Talkum, Bariumsulfat, Siliziumdioxid, Harnstoff-Formaldehyd-Pigmente, Melamin-Formaldehyd-Pigmente und mikrokristalline Cellulose. Die Verwendung solcher Feststoffe in Entschäumern ist aus der DE-A-36 01 929 bekannt.

Besonders vorteilhaft sind Entschäumerdispersionen, die 0,01 bis 3 Gew.-% eines Säuregruppen aufweisenden, wasserlöslichen, amphiphilen Copolymerisats oder eines Salzes davon enthalten.

Weitere vorteilhafte Entschäumerdispersionen enthalten als Stabilisator 0,1 bis 3 Gew.-%, bezogen auf die Öl-in-Wasser-Dispersionen, mindestens eines
- Polymerisats von monoethylenisch ungesättigten Säuren mit Molmassen von 1500 bis 300 000,
- Pfropfpolymerisats von 5 bis 40 Gew.-Teilen N-vinylformamid auf 100 Gew.-Teilen eines Polyalkylenglykols mit einer Molmasse von 500 bis 10 000,
- zwitterionischen Polyalkylenpolyamins,
- zwitterionischen Polyethylenimins,
- zwitterionischen Polyetherpolyamins oder
- zwitterionischen vernetzten Polyalkylenpolyamins
enthalten.

Bevorzugt werden Entschäumer und/oder Entlüfter, die als Stabilisator Homopolymerisate der Acrylsäure, Homopolymerisate der Methacrylsäure, Copolymerisate aus Acrylsäure und Methacrylsäure, Copolymerisate aus Acrylsäure und Maleinsäure, Copolymerisate aus Methacrylsäure und Maleinsäure, Polyvinylsulfonsäure, Polyacrylamido-2-methylpropansulfonsäure oder deren Alkalimetall- und Ammoniumsalze mit Molmassen von 1 500 bis 300 000 enthalten.

Gegenstand der Erfindung ist außerdem die Verwendung von
- Polymerisaten monoethylenisch ungesättigter Säuren mit Molmassen von 1500 bis 300 000,
- Pfropfpolymerisaten von 5 bis 40 Gew.-Teilen N-Vinylformamid auf 100 Gew.-Teilen eines Polyalkylenglykols mit einer Molmasse von 500 bis 10 000,
- zwitterionischen Polyalkylenpolyaminen,
- zwitterionischen Polyethyleniminen,
- zwitterionischen Polyetherpolyamins oder
- zwitterionischen vernetzten Polyalkylenpolyaminen
als Stabilisator für Entschäumer und/oder Entlüfter auf der Basis von Öl-in-Wasser-Emulsionen, die in der Öl-Phase 3-Thiaalkan-1-ole, 3-Thiaoxid-alkan-1-ole, 3-Thiadioxid-alkan-1-ole Ester der genannten Verbindungen oder deren Mischungen als entschäumend und/oder entlüftend wirksame Verbindungen enthalten.

Die Entschäumerdispersionen können jedoch auch übliche nichtionische, anionische, amphotere und/oder kationische Emulgatoren als alleinige Stabilisatoren oder als Co-Emulgatoren enthalten. Sie werden beispielsweise in Mengen von 0,01 bis 3 Gew.-%, zur Stabilisierung von Öl-in-Wasser-Dispersionen eingesetzt. Hierbei handelt es sich z.B. um gebräuchliche grenzflächenaktive Stoffe, die mit den übrigen Stoffen der Entschäumerdispersion verträglich sind. Die als alleiniger Emulgator oder als Co-Emulgator mit einem anionischen amphiphilen Copolymerisat eingesetzten oberflächenaktiven Verbindungen können auch in Mischung untereinander verwendet werden. So kann man beispielsweise Mischungen aus anionischen und nichtionischen oberflächenaktiven Stoffen zur weiteren Stabilisierung der Entschäumerdispersionen verwenden. Die als Co-Emulgator in Betracht kommenden oberflächenaktiven Verbindungen sind in den zum Stand der Technik angegebenen Literaturstellen als Bestandteil von Entschäumerformulierungen beschrieben. Solche Co-Emulgatoren sind beipielsweise Natrium- oder Ammoniumsalze höherer Fettsäuren, alkoxylierte Alkylphenole, oxethylierte ungesättigte Öle wie Reaktionsprodukte aus einem Mol Ricinusöl und 30 bis 40 Mol Ethylenoxid, sulfierte Ethoxylierungsprodukte von Nonylphenol oder Octylphenol sowie deren Natrium- oder Ammoniumsalze, Alkylarylsulfonate, Sulfonate von Naphthalin und Naphthalinkondensaten, Sulfosuccinate und Anlagerungsprodukte von Ethylenoxid und/oder Propylenoxid an Fettalkohole, mehrwertige Alkohole, Amine oder Carbonsäuren. Besonders wirksame Co-Emulgatoren sind sulfierte Alkyldiphenyloxide, insbesondere bissulfierte Alkyldiphenyloxide wie bis-sulfiertes Dodecyldiphenyloxid.

Die Herstellung der bevorzugten Entschäumerdispersionen erfolgt beispielsweise so, daß man zunächst die Komponenten aufschmilzt, die die Ölphase bilden, sie dann in Wasser emulgiert, ein Säuregruppen enthaltendes, wasserlösliches, amphiphiles Copolymerisat oder Salz davon oder einen anderen polymeren Stabilisator und gegebenenfalls mindestens einen der oben beschriebenen üblichen Co-Emulgatoren der noch heißen Emulsion, wenn die emulgierten Öltröpfchen noch flüssig sind, zusetzt und die Öl-in-Wasser-Emulsion unter Bildung einer Öl-in-Wasser-Dispersion abkühlt. Die genannten Stabilisatoren können jedoch auch nach dem Abkühlen der Öl-in-Wasser-Emulsion, wenn die Öltröpfchen fest geworden sind, der Entschäumer-Dispersion zugesetzt werden.

Eine Verfahrensvariante zur Herstellung besonders lagerstabiler Entschäumer-Dispersionen besteht darin, daß man die geschmolzene Ölphase in einer wäßrigen Lösung eines Säuregruppen enthaltenden, wasserlöslichen, amphiphilen Copolymerisats und/oder eines anderen polymeren Stabilisators emulgiert und mindestens einen Co-Emulgator nach dem Emulgieren zur heißen Öl-in-Wasser-Emulsion oder nach dem Abkühlen auf beispielsweise Raumtemperatur zur Entschäumer-Dispersion zusetzt. Wie sich gezeigt hat, neigen Entschäumer-Dispersionen, die außer dem amphiphilen anionischen Copolymerisat oder einem anderen polymeren Stabilisator noch mindestens einen Co-Emulgator enthalten, noch weniger zum Verdicken bzw. Aufrahmen als diejenigen Entschäumer-Dispersionen, die nur ein amphiphiles anionisches Copolymerisat als Stabilisator enthalten. Die einen Coemulgator enthaltenden Formulierungen stellen außerdem besonders wirksame Entschäumer und/oder Entlüfter dar. Dies gilt insbesondere für solche Formulierungen, die Polyalkylenglykole enthalten.

Sofern die polymeren Stabilisatoren in Form der freien Säure nicht ausreichend wasserlöslich sind, werden sie in Form von wasserlöslichen Salzen eingesetzt, z.B. verwendet man die entsprechenden Alkalimetall-, Erdalkalimetall und Ammoniumsalze. Diese Salze werden beispielsweise durch partielle oder vollständige Neutralisation der freien Säuregruppen der amphiphilen Copolymerisate mit Basen hergestellt, z.B, verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert.

Die amphiphilen Copolymerisate enthalten Einheiten von
(a) hydrophoben monoethylenisch ungesättigten Monomeren und
(b) monoethylenisch ungesättigten Carbonsäuren, monoethylenisch ungesättigten Sulfonsäuren, monoethylenisch ungesättigten Phosphonsäuren oder deren Mischungen.

Geeignete hydrophobe monoethylenisch ungesättigte Monomere
(a) sind beispielsweise Styrol, Methylstyrol, Ethylstyrol, Acrylnitril, Methacrylnitril, C₂- bis C₁₈-Olefine, Ester aus monoethylenisch ungesättigten C₃- bis C₅-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Die amphiphilen Copolymerisate enthalten als hydrophile Monomere
(b) vorzugsweise Acrylsäure, Methacrylsäure, Maleinsäure, Maleinsäureanhydrid, Itaconsäure, Vinylsulfonsäure, 2-Acrylamidomethylpropansulfonsäure, Acrylamido-propan-3-sulfonsäure, 3-Sulfopropylacrylat, 3-Sulfopropylmethacrylat, Styrolsulfonsäure, Vinylphosphonsäure oder deren Mischungen in einpolymerisierter Form.

Sofern die amphiphilen Copolymerisate in Form der freien Säure nicht ausreichend wasserlöslich sind, werden sie in Form von wasserlöslichen Salzen eingesetzt, z.B. verwendet man die entsprechenden Alkalimetall-, Erdalkalimetall- und Ammoniumsalze. Diese Salze werden beispielsweise durch partielle oder vollständige Neutralisation der freien Säuregruppen der amphiphilen Copolymerisate mit Basen hergestellt, z.B. verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert. Die Molmasse der amphiphilen Copolymerisate beträgt beispielsweise 1000 bis 100 000 und liegt vorzugsweise in dem Bereich von 1500 bis 10 000. Die Säurezahlen der amphiphilen Copolymerisate betragen beispielsweise 50 bis 500, vorzugsweise 150 bis 350 mg KOH/g Polymer.

Besonders bevorzugt sind solche Entschäumer und/oder Entlüfter, die mit amphiphilen Copolymerisaten stabilisiert sind, wobei die Copolymerisate
(a) 95 bis 45 Gew.-% Isobuten, Diisobuten, Styrol oder deren Mischungen und
(b) 5 bis 55 Gew.-% Acrylsäure, Methacrylsäure, Maleinsäure, Halbester von Maleinsäure oder deren Mischungen
einpolymerisiert enthalten. Besonders bevorzugt werden Copolymerisate eingesetzt, die
(a) 45 bis 80 Gew.-% Styrol,
(b) 55 bis 20 Gew.-% Acrylsäure und gegebenenfalls
(c) zusätzlich weitere Monomere
einpolymerisiert enthalten. Die Copolymerisate können gegebenenfalls als weitere Monomere (c) Einheiten von Maleinsäurehalbestern einpolymerisiert enthalten. Solche Copolymerisate sind beispielsweise dadurch erhältlich, daß man Copolymerisate aus Styrol, Diisobuten oder Isobuten oder deren Mischungen mit Maleinsäureanhydrid in Abwesenheit von Wasser copolymerisiert und die Copolymerisate im Anschluß an die Polymerisation mit Alkoholen umsetzt, wobei man pro Mol Anhydridgruppen im Copolymerisat 5 bis 50 Mol-% eines einwertigen Alkohols einsetzt. Geeignete Alkohole sind beispielsweise Methanol, Ethanol, n-Propanol, Isopropanol, n-Butanol, Isobutanol und tert.-Butanol. Man kann jedoch auch die Anhydridgruppen der Copolymerisate mit mehrwertigen Alkoholen wie Glykol oder Glycerin umsetzen. Hierbei wird die Reaktion jedoch nur soweit geführt, daß nur eine OH-Gruppe des mehrwertigen Alkohols mit der Anhydridgruppe reagiert. Sofern die Anhydridgruppen der Copolymerisate nicht vollständig mit Alkoholen umgesetzt werden, erfolgt die Ringöffnung der nicht mit Alkoholen umgesetzten Anhydridgruppen durch Zugabe von Wasser.

Andere als Stabilisator einzusetzende Verbindungen sind beispielsweise handelsübliche Polymerisate von monoethylenisch ungesättigten Säuren sowie Pfropfpolymerisate von N-Vinylformamid auf Polyalkylenglykolen, die beispielsweise in der WO-A-96/34903 beschrieben werden. Die aufgepfropften Vinylformamideinheiten können gegebenenfalls bis zu 10 % hydrolysiert sein. Der Anteil an aufgepfropften Vinylformamideinheiten beträgt vorzugsweise 20 bis 40 Gew.-%, bezogen auf Polyalkylenglykol. Vorzugsweise verwendet man Polyethylenglykole mit Molmassen von 2000 bis 10 000.

Die außerdem als Stabilisatoren in Betracht kommenden zwitterionischen Polyalkylenpolyamine und zwitterionischen Polyethylenimine sind beispielsweise aus der EP-B-0112592 bekannt. Solche Verbindungen sind beispielsweise dadurch erhältlich, daß man ein Polyalkylenpolyamin oder Polyethylenimin zunächst alkoxyliert, z.B. mit Ethylenoxid, Propylenoxid und/oder Butylenoxid und die Alkoxylierungsprodukte anschließend quaternisiert, z.B. mit Methylbromid oder Dimethylsulfat und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1000 bis 9000 vorzugsweise 1500 bis 7500. Die zwitterionischen Polyethylenimine haben vorzugsweise Molmassen in dem Bereich von 2000 bis 1700 Dalton.

Als Stabilisatoren in Betracht kommende zwitterionische Polyetherpolyamine sind beispielsweise dadurch erhältlich, daß man in einer ersten Reaktionsstufe lineare oder verzweigte Polyetherpolyamine mit Molmassen von 100 bis 800, die 2 bis 10 Stickstoffatome und mindestens 2 primäre oder sekundäre Aminoendgruppen enthalten oder die Reaktionsprodukte der genannten Polyetherpolyaminen mit bis zu einem Mol Glycidol pro NH-Gruppe der Polyetherpolyamine mit mindestens einem C₂- bis C₄-Alkylenoxid oder Tetrahydrofuran in einer Menge umsetzt, daß pro NH-Gruppe in den Polyetherpolyaminen 1 bis 50 Alkylenoxideinheiten addiert sind. In einem zweiten Verfahrensschritt werden die alkoxylierten Polyetherpolyamine mit einer Verbindung ausgewählt aus der Gruppe von Halogensulfonsäuren, Halogenphosphorsäuren, Vinylsulfonsäure, Propansulton, Halogenessigsäuren, Acrylsäure, Methacrylsäurevinylphosphorsäure und der Alkalimetall- oder Ammoniumsalze der genannten Säuren in der weise umgesetzt, daß mindestens eine tertiäre Aminoendgruppe der alkoxylierten Polyetherpolyamine 2 Gruppen der Formeln

-(A)ₙ-X (I)

oder 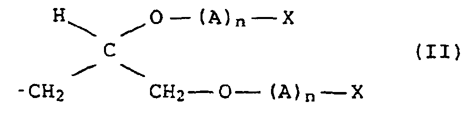 enthält, in der
- A: (= Ethylenoxid-, Propylenoxid-, Butylenoxid- oder Tetrahydrofuran-Einheit
- n =: eine Zahl von 1 bis 50,
X = ―SO₃M, ―CH₂―CH₂―SO₃M, ―CH₂―CH₂―CH₂―SO₃M, 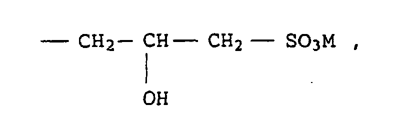 ―CH₂―COOM, ― CH₂― CH₂―COOM,
―PO₃M₂, ―CH₂―CH₂―PO₃M₂,
ist, wobei in Formel II ein Substituent X auch Wasserstoff sein kann,
M = Wasserstoff, Alkalimetall oder Ammonium ist. Mindestens eine tertiäre Aminoendgruppe der alkoxylierten Polyetherpolyamine kann jedoch auch nur eine Gruppe der Formel I oder II und eine Gruppe der folgenden Strukturen

―(A)ₙ―H,

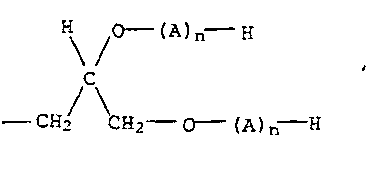

C₁- bis C₂₂-Alkyl oder C₇- bis C₂₂-Aralkyl enthalten, wobei A und n dieselbe Bedeutung haben wie in den Formeln I und II.

In einer 3. Verfahrensstufe wird das in der 2. Verfahrensstufe erhaltene Reaktionsprodukt quaternisiert. Die Quaternisierung kann jedoch auch dadurch erreicht werden, daß man das in der 1. Reaktionsstufe erhältliche Produkt quaternisiert und anschließend die in der 2. Reaktionsstufe angegebene Umsetzung durchführt.

Von besonderem technischen Interesse als Stabilisator sind zwitterionische Polyetherpolyamine der Formeln 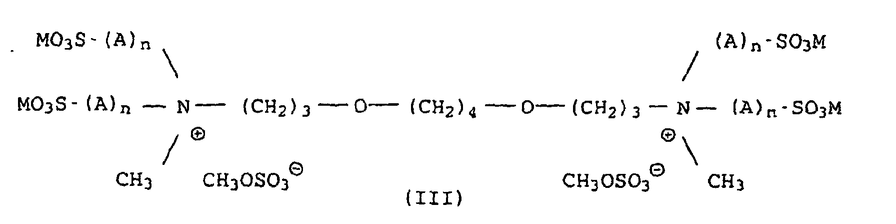 in der
- A =: 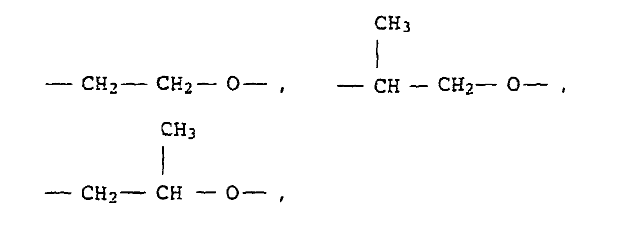
- M: is H, Na, K, ammonium and
- n: is 15-25
und 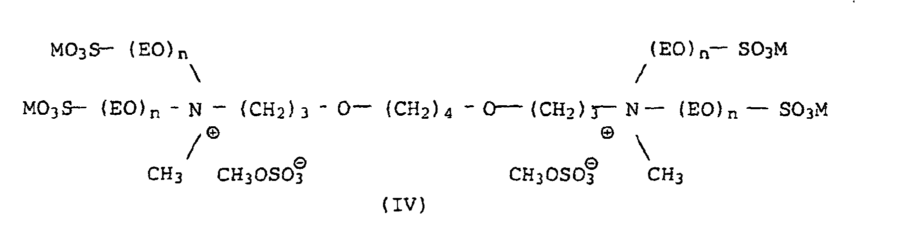 in der
- EO =: -CH₂-CH₂-O-
- M =: H, Na, K or Ammonium und
- n =: 15-25.

Die Molmasse der zwitterionischen Polyetherpolyamine beträgt z.B. bis zu 9,000, vorzugsweise 1,500 bis 7,500.

Zwitterionische vernetzte Polyamine, die ebenfalls als Stabilisator für Öl-in-Wasser-Dispersionen in Betracht kommen, sind beispielsweise dadurch erhältlich, daß man aliphatische oder araliphatische Monoamine oder Polyamine mit 2 bis 5 primären, sekundären oder tertiären Stickstoffgruppen mit einem Vernetzungsmittel beispielsweise im Verhältnis 20:1 bis 1:1, bezogen auf molare Mengen von Aminogruppen in den Aminen und molare Mengen reaktiver Gruppen in den Vernetzern unter Bildung vernetzter Polyamine mit Molmassen von 150 bis 1500 umsetzt, die vernetzten Amine alkoxyliert, in die so erhältlichen Produkte anschließend eine anionische Gruppe einführt, indem man diese Verbindungen z.B. mit einer Halogensulfonsäure, Halogenphosphorsäure, Vinylsulfonsäure, Propansulfonsäure, Halogenessigsäure, Acrylsäure, Methacrylsäure, Vinylphosphorsäure oder den Alkalimetall- oder Ammoniumslazen der genannten Säuregruppen enthaltenden Verbindungen umsetzt und die Produkte anschließend quaterniert, z.B. mit Methylbromid oder Dimethylsulfat, wobei die Quaternierung auch direkt nach der Alkoxylierung der vernetzten Polyamine erfolgen kann. Auch die oben beschriebenen Polyetheramine können als Polyamine eingesetzt werden. Beispielsweise kann man geeignete Stabilisatoren dadurch herstellen, daß man 4,9-Dioxadodecan-1,12-diamin mit Epichlorhydrin im Molverhältnis 2:1 umsetzt, das dabei erhältliche Reaktionsprodukt ethoxyliert, wobei man pro NH-Gruppe beispielsweise 20 Mol Ethylenoxid addiert, das Reaktionsprodukt dann mit Dimethylsulfat quaternisiert und das quaternisierte Produkt in einer weiteren Reaktionsstufe durch Umsetzung mit SO₃ oder Chlorsulfonsäure sulfatiert.

Als Stabilisator für die erfindungsgemäßen Entschäumer und/oder Entlüfter kommen vorzugsweise Homopolymerisate der Acrylsäure, Homopolymerisate der Methacrylsäure, copolymerisate aus Acrylsäure und Methacrylsäure in jedem beliebigen Molverhältnis, Copolymerisate aus Acrylsäure und Maleinsäure in jedem beliebigen Molverhältnis, Copolymerisate aus Methacrylsäure und Maleinsäure, Polyvinylsulfonsäure, Polyacrylamido-2-methylpropansulfonsäure, Styrolsulfonsäure oder die Alkalimetall- und Ammoniumsalze der genannten Polymeren mit Molmassen von beispielsweise 1500 bis 300 000 in Betracht.

Die erfindungsgemäßen Entschäumer und/oder Entlüfter sind in wäßrigen Systemen, die zum Schäumen neigen, sowohl bei Raumtemperatur als auch bei höheren Temperaturen, z.B. bei Temperaturen oberhalb von 40°C, sehr wirksam. Sie haben gegenüber bekannten Entschäumern eine wesentlich verbesserte Langzeitwirkung. Die wäßrigen Dispersionen werden vorzugsweise als Entschäumer und/oder Entlüfter zur Schaumbekämpfung von zur Schaumbildung neigenden wäßrigen Medien beispielsweise in der Nahrungsmittelindustrie, der Stärkeindustrie und in Kläranlagen eingesetzt. Von besonderem Interesse ist jedoch die Verwendung der Entschäumer und/oder Entlüfter zur Schaumbekämpfung bei der Zellstoffkochung, Zellstoffwäsche, der Mahlung von Papierstoff, der Papierherstellung und der Dispergierung von Pigmenten für die Papierherstellung. Bei diesen Prozessen liegt die Temperatur des zu entschäumenden wäßrigen Mediums meistens oberhalb von 40°C, z.B. in dem Temperaturbereich von 45 bis 75°C. Die erfindungsgemäßen Mischungen auf Basis von Öl-in-Wasser-Dispersionen wirken sowohl als Entschäumer auch als Entlüfter. In manchen Fällen ist die entlüftende Wirkung ausgeprägter als die entschäumende Wirkung. Sie können als Entschäumer oder Entlüfter verwendet werden. Sie werden auch mit Vorteil bei der Masse- und Oberflächenleimung von Papier eingesetzt. Beim Einsatz dieser Mischungen in Papierstoffsuspensionen steht beispielsweise ihre entlüftende Wirkung im Vordergrund. Bezogen auf 100 Gew.-Teile Papierstoff in einem schaumstoffbildenden Medium verwendet man beispielsweise bis zu 0,5, vorzugsweise 0,002 bis 0,3 Gew.-% der Entlüfter.

Die in den Beispielen angegebenen Teile sind Gew.-Teile. Die Prozentangaben beziehen sich auf das Gewicht, sofern nicht etwas anderes aus den Angaben in den Beispielen hervorgeht.

### Beispiele

Die Aufrahmtendenz der Dispersionen wurde mit dem sogenannten Zentrifugentest bestimmt. Dazu wurde die Dispersion in ein 97 mm langes Zentrifugenglas bis zu einer Höhe von 75 mm gegossen und 30 Min bei 5 000 U/min zentrifugiert. Je größer die unten abgetrennte Menge an Wasser war, desto geringer die Stabilität der Dispersion. Gemessen wurde die Höhe vom Boden des Zentrifugenglases bis zur Fettphasenfront.

Die entlüftende Wirkung wurde mit Hilfe eines Sonica-Meßgerätes bestimmt, wobei man zu einer 0,38 %igen Papierstoffsuspension bei 40°C genau soviel zugab, daß sich eine Konzentration von 5 ppm an Entschäumer, bezogen auf die Fettphase (Wirksubstanz) ergab. Man bestimmte den Luftgehalt kontinuierlich mittels Ultraschallabschwächung vor der Dosierung der Entschäumer und während der ersten 5 Minuten nach der Dosierung. Der Luftgehalt nahm zunächst ab und stieg gegen Ende der Messung wieder an. In den Tabellen ist jeweils der minimale Luftgehalt der Papierstoffsuspension in Vol.-% angegeben. Diese Meßmethode ist beschrieben in TAPPI Journal, Vo. 71, 65-69 (1988).

Die genannte Papierstoffsuspension wurde in allen Beispielen und Vergleichsbeispielen verwendet. Sie enthielt vor Zugabe eines Entlüfters 1,44 Vol.-% Luft. In der Tabelle ist unter der Rubrik minimaler Luftgehalt der Gehalt an Luft in Vol.-% nach Dosierung der Entlüfter angegeben. Je kleiner diese Zahl ist, um so wirksamer ist der Entlüfter.

Die Langzeitwirkung der Entschäumer bzw. Entlüfter wurde bestimmt, indem man den Luftgehalt der Papierstoffsuspension nach 5 Minuten mit dem minimalen Luftgehalt (unmittelbar nach der Dosierung des Entlüfters) verglich. Der in der Tabelle für die Langzeitwirkung angegebene Wert ist die Differenz aus dem Wert für die entlüftende Wirkung nach 5 Minuten und dem Wert, der unmittelbar nach der Dosierung gemessen wird. Je kleiner der Wert ist, desto besser ist die Langzeitwirkung.

Die entschäumende Wirkung wurde in einer sogenannten Schaumrinne ebenfalls bei 50°C bestimmt, wobei der Entschäumer einer Papierstoffsuspension zugegeben wird, die durch Eintragen von Luft aufgeschäumt wird. Der Schaumberg wird zweidimensional auf die vertikale Wand der Schaumrinne gebildet und in cm² ausgezählt. Diese Methode ist aus der Literatur bekannt, vgl. F. Poschmann, Das Papier 15, 295-301 (1961).

Die angegebenen Teilchengrößen sind Mittelwerte, die mit Hilfe eines Coulter LS 230 Gerätes an ca. 0,1 %igen Dispersionen bestimmt wurden. Das Gerät arbeitet nach dem Prinzip der Fraunhofer-Beugung.

### Herstellung von 3-Thiaalkan-1-olen

### Thiaalkanol A

In einem Reaktor aus V2A-Stahl wurden 402 g (1,3 Mol) eines C₂₀-/C₂₄-α-Olefingemisches (Schmelzpunkt ca. 50°C) auf eine Temperatur von 65°C erhitzt. Danach tropfte man 101,5 g (1,3 Mol) 2-Mercaptoethanol innerhalb von 30 Minuten zu und leitete kontinuierlich einen Luftstrom über die Reaktionsmischung. Die Temperatur des Reaktionsgemisches stieg während der Mercaptoethanolzugabe auf 84°C an. Nach Beendigung der Zugabe von Mercaptoethanol wurde das Reaktionsgemisch noch 10 Stunden bei einer Temperatur von 100°C gerührt und danach nicht umgesetztes Mercaptoethanol abdestilliert. Anschließend wurden restliche flüchtige Verunreinigungen mit Hilfe einer wasserdampfdestillation entfernt. Man erhielt 398 g eines farblosen Wachses mit einem Schmelzpunkt von ca. 65°C.

### Thiaalkanol B

In einem mit einem Rührer ausgestatteten Reaktor aus V2A-Stahl wurden 309 g (1,0 Mol) eines C₂₀-/C₂₄-α-Olefingemisches mit einem Schmelzpunkt von ca. 50°C auf eine Temperatur von 80°C erhitzt. Zu der Schmelze tropfte man innerhalb von 30 Minuten 70 g (0,9 Mol) 2-Mercaptoethanol und leitete gleichzeitig einen Luftstrom über die Reaktionsmischung. Die Temperatur stieg bis auf 84°C an. Nach Zugabe des Mercaptoethanols wurde das Reaktionsgemisch noch 20 Stunden bei 90°C gerührt, bis der Mercaptoethanolgehalt unter 0,3 % lag. Anschließend kühlte man das Reaktionsgemisch auf 75°C ab und entfernte anschließend unter einem Druck von 75 mbar die flüchtigen Anteile. Man erhielt 378 g eines farblosen Wachses mit einem Schmelzpunkt von ca. 65°C.

### Thiaalkanol C

In einen Reaktor aus V2A-Stahl wurden 309 g (1,0 Mol) eines C_{20/24} α-Olefingemisches (Schmelzpunkt ca. 50°C) und 70 g (0,9 Mol) Mercaptoethanol gleichzeitig über einen Zeitraum von 30 Minuten zudosiert und gleichzeitig ein Luftstrom über das Reaktionsgemisch geleitet. Die Temperatur stieg bis auf 95°C an. Nach erfolgter Dosierung wird 20 h bei 90°C gerührt, bis der Mercaptoethanol-Gehalt unter 0,3 Gew.-% abgefallen war. Anschließend kühlte man das Reaktionsgemisch auf 75°C und entfernte danach die flüchtigen Anteile unter einem Druck von 75 mbar. Man erhielt 365 g eines farblosen Wachses mit einem Schmelzpunkt von ca. 65°C.

### Thiaalkanol D

Man arbeitete wie bei der Herstellung von Thiaalkanol B beschrieben, setzte jedoch anstelle von 0,9 Mol 2-Mercaptoethanol jetzt 0,8 Mol 2 Mercaptoethanol ein.

### Thiaalkanol E

Herstellung wie bei Thiaalkanol B beschrieben, jedoch mit der einzigen Ausnahme, daß man 0,95 Mol 2-Mercaptoethanol einsetzte.

### Thiaalkanol F

Herstellung wie Thiaalkanol B, jedoch mit der Änderung, daß man 0,85 Mol 2-Mercaptoethanol einsetzte.

### Beispiel 1

Mit Hilfe eines Ultraturrax und eines Hochdruckhomogenisators der Fa. APV Gaulin GmbH wurde eine Öl-in-Wasser-Emulsion hergestellt, bei der die ölphase zu 27,3 Gew.- % am Aufbau der Dispersion beteiligt war und eine mittlere Teilchengröße von 0,9 bis 10 µm hatte.

Die hydrophobe Phase bestand aus folgenden Komponenten:
(a) 664 Teilen des Thiaalkanols B,
(b) 56 Teilen eines Polyglycerinesters, der erhältlich ist durch Verestern eines Polyglyceringemisches aus 27 % Diglycerin, 44 % Triglycerin, 19 % Tetraglycerin und 10 % höher kondensierten Polyglycerinen mit Behensäure (Veresterungsgrad 100 %),
(c) 254,8 Teilen Glycerintriester von C₁₆- bis C₁₈-Fettsäuren.

Die Wasserphase bestand aus:
2 560 Teilen vollentsalztem Wasser,
28 Teilen einer 40 %igen wäßrigen, ammoniakalischen Lösung eines amphiphilen Copolymerisats aus 50 Teilen Acrylsäure und 50 Teilen Styrol mit einer Säurezahl von 320 mg KOH/g Polymer und einer Molmasse von 5 500 sowie 3,5 Teilen eines Xanthan Gummis.

Die wäßrige Lösung wurde auf eine Temperatur von 95°C erhitzt.

Die oben angegebenen Komponenten (a) bis (c) wurden zunächst auf eine Temperatur von 90°C erhitzt und dann in die auf 95°C erhitzte wäßrige Phase unter hoher Scherung mit einem Ultraturrax während 2 Minuten emulgiert. Die Emulsion wurde in 3 Teile geteilt, die dann bei Drücken von 10, 20 bzw. 40 bar mittels eines Hochdruckhomogenisators emulgiert und jeweils sofort nach der Emulgierung in einem Eisbad auf Raumtemperatur abgekühlt wurden. Die Eigenschaften der so erhaltenen Dispersionen sind in Tabelle 1 angegeben.

### Beispiel 2

Wie in Beispiel 1 beschrieben wurde eine Öl-in-Wasser-Dispersion hergestellt, bei der die hydrophobe Phase aus folgenden Komponenten bestand:
(a) 92 Teilen des Thiaalkanol A,
(b) 8 Teilen eines Polyglycerinesters, der erhältlich ist durch Verestern eines Polyglyceringemisches aus 27 % Diglycerin, 44 % Triglycerin, 19 % Tetraglycerin und 10 % höher kondensierten Polyglycerinen mit einem C₁₂- bis C₂₆-Fettsäuregemisch (Veresterungsgrad 60 %) sowie
(c) 36,4 Teilen Glycerintriester von C₁₈-Fettsäuren.

Die wäßrige Phase bestand aus 360 Teilen Wasser, 5 Teilen einer 27 %igen wäßrigen, ammoniakalischen Lösung eines amphiphilen Copolymerisats aus 25 Teilen Acrylsäure und 75 Teilen Styrol mit einer Molmasse von 16.000 D und einer Säurezahl von 240 mg KOH/g Polymer.

Die Komponenten (a) bis (c) wurden gemischt und zunächst auf eine Temperatur von 110°C erhitzt und dann in eine auf 80°C erhitzte wäßrige Lösung unter hoher Scherung durch einen Ultraturrax in 15 Sekunden eingetragen und dann während 45 Sekunden emulgiert und sofort nach der Emulgierung mit einem Eisbad auf Raumtemperatur abgekühlt. Die Eigenschaften der Dispersion sind in Tabelle 1 angegeben.

### Beispiel 3

Nach den Angaben von Beispiel 1 wurde eine Öl-in-Wasser-Dispersion hergestellt, bei der die hydrophobe Phase aus
(a) 92 Teilen des Thiaalkanols D,
(b) 8 Teilen eines Polyglycerinesters, der hergestellt wurde durch Verestern eines Polyglyceringemisches aus 27 % Diglycerin, 44 % Triglycerin, 19 % Tetraglycerin und 10 % höher kondensierten Polyglycerinen mit Behensäure (Veresterungsgrad 100 %) und
(c) 36,4 Teilen Glycerintriester von C₁₆- bis C₁₈-Fettsäuren bestand.

Die wäßrige Phase bestand aus 360 Teilen vollentsalztem Wasser, 4 Teilen einer 40 %igen ammoniakalischen Lösung eines amphiphilen Copolymerisats aus 50 Teilen Acrylsäure und 50 Teilen Styrol (Molmasse 5500, Säurezahl 320 mg KOH/g Polymer) sowie 0,5 Teilen eines Xanthan-Gummis. Die oben angegebenen Komponenten (a) bis (c) wurden zunächst auf eine Temperatur von 90°C erhitzt und dann in die auf 95°C erhitzte wäßrige Phase unter hoher Scherung mit einem Ultraturrax in 15 Sekunden eingetragen und anschließend während 45 Sekunden emulgiert und unmittelbar nach der Emulgierung in einem Eisbad auf Raumtemperatur abgekühlt. Die Eigenschaften der Dispersion sind in Tabelle 1 angegeben.

### Beispiel 4

Mit Hilfe eines Ultraturrax wurde eine Öl-in-Wasser-Dispersion hergestellt, bei der die Ölphase zu 27,3 % am Aufbau der Dispersion beteiligt war und eine mittlere Teilchengröße von 0,9 bis 10 µm hatte. Die hydrophobe Phase bestand aus folgenden Komponenten:
(a) 92 Teilen des Thiaalkanols E,
(b) 8 Teilen eines Polyglycerinesters, der hergestellt wurde durch Verestern eines Polyglyceringemisches aus 27 % Diglycerin, 44 % Triglycerin, 19 % Tetraglycerin und 10 % höher kondensierten Polyglycerinen mit Behensäure (Veresterungsgrad 100 %) und
(c) 36,4 Teilen Glycerinester von C₁₆- bis C₁₈-Fettsäuren.

Die wäßrige Phase bestand aus 360 Teilen vollentsalztem Wasser, 4 Teilen einer 40 %igen wäßrigen ammoniakalischen Lösung eines amphiphilen Copolymerisats aus 50 Teilen Acrylsäure und 50 Teilen Styrol (Molmasse 5500, Säurezahl 320 mg KOH/g Polymer) sowie 0,5 Teilen eines handelsüblichen Xanthan-Gummis. Die Komponenten (a) bis (c) der hydrophoben Phase wurden gemischt und auf eine Temperatur von 90°C erhitzt und dann in die auf 95°C erhitzte wäßrige Phase innerhalb von 15 Sekunden unter hoher Scherung durch einen Ultraturrax eingetragen und anschließend während 45 Sekunden emulgiert. Die Öl-in-Wasser-Emulsion wurde in einem Eisbad auf Raumtemperatur abgekühlt. Die Eigenschaften der so erhaltenen Dispersion sind in Tabelle 1 angegeben.

### Beispiel 5

Nach den Angaben in Beispiel 1 wurde eine Öl-in-Wasser-Dispersion hergestellt, indem man eine Ölphase aus
(a) 92 Teilen des Thiaalkanols F,
(b) 8 Teilen eines Polyglycerinesters, der erhältlich ist durch Verestern eines Polyglyceringemisches aus 27 % Diglycerin, 44 % Triglycerin, 19 % Tetraglycerin und 10 % höher kondensierten Polyglycerinen mit Behensäure (Veresterungsgrad 100 %) sowie
(c) 36,4 Teilen Glycerintriester von C₁₆- bis C₁₈-Fettsäuren in einer wäßrigen Phase emulgierte. Die wäßrige Phase bestand aus 360 Teilen vollentsalztem Wasser und 4 Teilen einer 45 %igen wäßrigen Lösung eines Bis-sulfonierten-dodecyldiphenyloxids (Dowfax 2A1). Die Komponenten (a) bis (c) der Ölphase wurden gemischt, auf eine Temperatur von 90°C erhitzt und dann in die auf 95°C erhitzte wäßrige Phase innerhalb von 15 Sekunden unter hoher Scherung durch einen Ultraturrax eingetragen und anschließend 45 Sekunden emulgiert. Sofort nach der Emulgierung kühlte man die Mischung ab. Die Eigenschaften der so erhaltenen Öl-in-Wasser-Dispersion sind in Tabelle 1 angegeben.

### Vergleichsbeispiel

Nach den Angaben in der EP-A-0662172 stellte man zunächst eine Ölphase aus folgenden Komponenten her:
(a) 18 Teile eines Glycerintriesters von C₁₆- bis C₁₈-Fettsäuren,
(b) 5 Teile eines Polyglycerinesters, der hergestellt wurde durch Verestern eines Polyglyceringemisches aus 27 % Diglycerin, 44 % Triglycerin, 19 % Tetraglycerin und 10 % höher kondensierten Polyglycerinen, mit einem C₁₂- bis C₂₆-Fettsäuregemisch (Veresterungsgrad 60 %) und
(c) 2 Teile eines Fettsäureesters, der durch Verestern eines C₁₆bis C₁₈-Fettsäuregemisches mit einem Blockcopolymerisat aus Ethylenoxid und Propylenoxid im Molverhältnis 3 : 7 vom Molekulargewicht 1200 g/Mol erhältlich ist.

Die Komponenten (a) bis (c) wurden gemischt und zunächst auf eine Temperatur von 110°C erhitzt und dann in einer wäßrigen Phase aus 70 Teilen vollentsalztem Wasser, 3 Teilen eines Emulgators, der erhältlich ist durch Anlagerung von 25 Mol Ethylenoxid an 1 Mol Isooctylphenol und Verestern des Anlagerungsproduktes mit Schwefelsäure zum Halbester und 1 Teil eines Copolymerisats aus 70 % Acrylamid und 30 % Acrylsäure vom K-Wert 270 sowie 0,2 Teile Natronlauge emulgiert. Hierzu erhitzte man zunächst die wäßrige Phase auf eine Temperatur von 80°C und emulgierte die hydrophobe Phase unter hoher Scherung durch einen Ultraturrax während einer Minute. Sofort nach der Emulgierung wurde die Mischung in einem Eisbad auf Raumtemperatur abgekühlt. Die Eigenschaften der so erhaltenen Dispersion sind in Tabelle 1 angegeben.

### Beispiel 6

Nach den Angaben in Beispiel 1 wurde eine Öl-in-Wasser-Dispersion hergestellt, bei der die Ölphase folgende Zusammensetzung hatte:
(a) 644 Teile Thiaalkanol C,
(b) 56 Teile eines Polyglycerinesters, der erhältlich ist durch Verestern eines Polyglyceringemisches aus 27 % Diglycerin, 44 % Triglycerin, 19 % Tetraglycerin und 10 % höher kondensierten Polyglycerinen mit Behensäure (Veresterungsgrad 100 %) sowie
(c) 254,8 Teile Glycerintriester von C₁₆-C₁₈-Fettsäuren.

Die Wasserphase bestand aus:
2560 Teilen vollentsalztem Wasser,
12 Teilen eines Polyglycerinesters aus Polyglycerin einer mittleren Molmasse von 200 und Ölsäure im Molverhältnis 1 : 1,7 und
3,5 Teilen eines Xanthan-Gummis.

Die wäßrige Lösung wurde mit den Komponenten (a), (b) und (c) wie im Beispiel 1 angegeben, bei Drücken von 20 bzw. 40 bar zu einer Öl-in-Wasser-Dispersion verarbeitet.

### Beispiel 7

Es wurde eine Öl-in-Wasser-Dispersion hergestellt, indem man eine hydrophobe Phase aus
(a) 92 Teilen des Thiaalkanols B,
(b) 8 Teilen eines Polyglycerinesters, der erhältlich ist durch Verestern eines Polyglyceringemisches aus 27 % Diglycerin, 44 % Triglycerin, 19 % Tetraglycerin und 10 % höher kondensierten Polyglycerinen mit Behensäure (Veresterungsgrad 100 %),
(c) 16 Teilen eines hydrierten Rizinusöls mit Jodzahl < 5 sowie
(d) 4 Teilen eines feinteiligen Kaolins Teilchengröße 98 % < 2 µm
unter starkem Rühren mit einem Ultraturrax bei 85°C vorlegt und die erwärmte wäßrige Phase bestehend aus
370 Teilen vollentsalztem Wasser sowie
2,5 Teilen einer 40 %igen wäßrigen ammoniakalischen Lösung eines amphiphilen Copolymerisats aus 50 Teilen Acrylsäure und 50 Teilen Styrol (Molmasse 5500, Säurezahl 320 mg KOH/g Polymer) innerhalb von 20 sek eintrug und während 30 sek emulgierte. Die so hergestellte Voremulsion wurde anschließend 2 mal bei 85°C in einer Kolloidmühle mit einer Spalteinstellung von 1 µm homogenisiert und sofort mit Eis auf 25°C abgekühlt, so daß man eine feinteilige Dispersion der Komponenten der hydrophoben Phase in Wasser erhielt (mittlerer Teilchendurchmesser 2,6 µm).

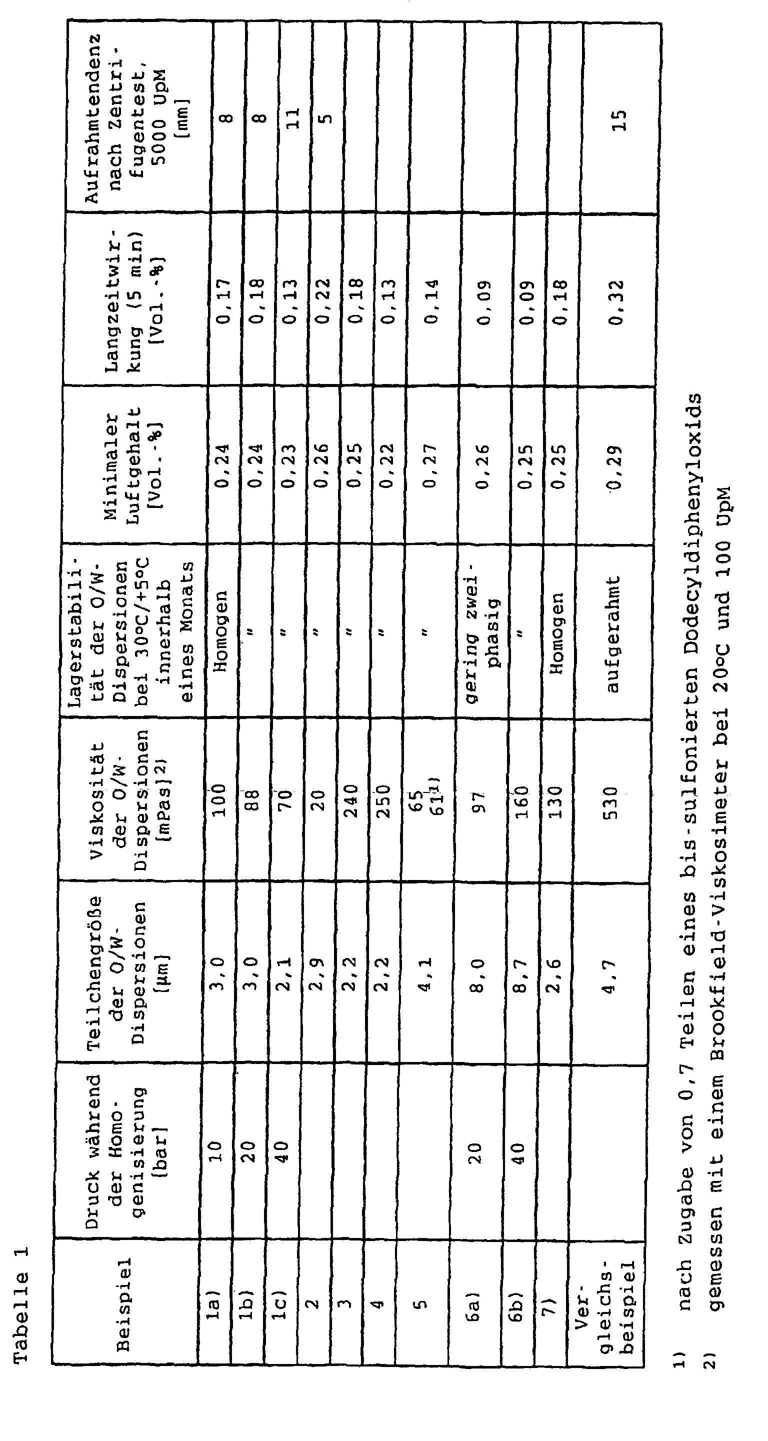

### Beispiel 8

Mit Hilfe einer Sonotrode (Ultraschallsonde vom Typ UP 400s der Dr. Hielscher GmbH) wurde eine Öl-in-Wasser-Dispersion hergestellt, bei der die Ölphase zu 23,8 Gew.-% am Aufbau der Dispersion beteiligt war und eine mittlere Teilchengröße von 0,2 bis 30 µm hatte.

Die Ölphase bestand aus folgenden Komponenten:
(a) 3,15 Teile Thiaalkanol B
(b) 0,22 Teile eines Polyglycerinesters, der erhältlich ist durch vollständige Veresterung eines Polyglyceringemisches aus 27 % Diglycerin, 44 % Triglycerin, 19 % Tetraglycerin und 10 % höher kondensierten Polyglycerinen mit Behensäure.

Die Wasserphase bestand aus :
10,6 Teilen einer 0,4 %igen Lösung eines hochmolekularen anionischen Polyacrylamids (Molmasse > 1 Mio) und 0,15 Teilen einer
45 %igen wässrigen Lösung des Na-Salzes eines Acrylsäure-Homopolymers mit einer mittleren Molmasse von 2 500.

Die Komponenten (a) und (b) wurden zunächst bis auf eine Temperatur von 90°C erhitzt und dann in die 95°C heiße wässrige Phase unter hoher Scherung mit der Sonotrode während 1 Minute und einer Leistung von 20 % emulgiert und in einem Eisbad sofort auf Remperatur abgekühlt. Die Eigenschaften der so erhältlichen Dispersion sind in Tabelle 2 wiedergegeben.

### Beispiel 9

Mit Hilfe eines Ultraturrax (Kolloidmühle) und eines Hochdruckhomogenisators der Fa. APV Gaulin GmbH wurde eine Öl-in-Wasser-Dispersion hergestellt, bei der die Ölphase zu 23,8 Gew.-% am Aufbau der Dispersion beteiligt war.

Die Ölphase bestand aus folgenden Komponenten:
(a) 644 Teilen Thiaalkanol B
(b) 56 Teilen eines Polyglycerinesters, der erhältlich ist durch vollständige Veresterung eines Polyglyceringemisches aus 27 % Diglycerin, 44 % Triglycerin, 19 % Tetraglycerin und 10 % höher kondensierten Polyglycerinen mit Behensäure und
(c) 254,8 Teile Glycerintriester von C₁₆-C₁₈-Pettsäuren

Die Wasserphase bestand aus:
2 454 Teilen Wasser, 77,7 Teilen einer 45 %igen wässrigen Lösung des Na-Salzes eines Acrylsäure-homopolymers mit einer mittleren Molmasse von 2 500 und 8,75 Teilen eines hochmolekularen anionischen Polyacrylamids (Molmasse > 1Mio)

Die Komponenten (a) bis (c) wurden zunächst bis auf eine Temperatur von 90°C erhitzt und dann in die 95°C heiße wässrige Phase unter hoher Scherung durch einen Ultraturrax während 2 Minuten emulgiert. Diese Emulsion wird dann bei Drücken von 20, 40 und 60 bar mittels eines Hochdruckhomogenisators der Fa. APV Gaulin GmbH weiteremulgiert und sofort nach der Emulgierung mit einem

Eisbad auf Raumtemperatur abgekühlt. Die Eigenschaften der so erhältlichen Dispersionen sind in Tabelle 2 wiedergegeben.

### Beispiel 10

Mit Hilfe einer Ultraschallsonde vom Typ UP 400 s der Dr. Hielscher GmbH wurde eine Ö1-in-Wasser-Dispersion hergestellt, bei der die Ölphase zu 23,8 Gew.-% am Aufbau der Dispersion beteiligt war und eine mittlere Teilchengröße von 0,6 bis 8 µm hatte.

Die Ölphase bestand aus folgenden Komponenten:
(a) 3,15 Teile Thiaalkanol B und
(b) 0,22 Teile eines Polyglycerinesters, der erhältlich ist durch 100 %ige Veresterung eines Polyglyceringemisches aus 27 % Diglycerin, 44 % Triglycerin, 19 % Tetraglycerin und 10 % höher kondensierten Polyglycerinen mit Behensäure.

Die Wasserphase bestand aus:
10,6 Teilen einer 0,4 %igen Lösung eines hochmolekularen anionischen Polyacrylamids (Molmasse > 1 Mio) ,
0,15 Teilen einer 35 %igen wässrigen Lösung eines Acrylsäure-Homopolymers mit einer mittleren Molmasse von 100 000. Die Komponenten (a) und (b) wurden zunächst bis auf eine Temperatur von 90°C erhitzt und dann in die 95°C heiße wässrige Phase unter hoher Scherung mit der Sonotrode während 1 Minute und einer Leistung von 20 % einemulgiert und sofort mit einem Eisbad auf RT abgekühlt. Die Eigenschaften der so erhältliche Dispersion sind in Tabelle 2 wiedergegeben sind.

### Beispiel 11

Mit Hilfe einer Ultraschallsonde vom Typ UP 400 s der Dr. Hielscher GmbH wurden 4 Öl-in-Wasser-Dispersionen hergestellt, bei der die Ölphase zu 23,8 Gew.-% am Aufbau der Dispersion beteiligt war.

Die Ölphase bestand aus folgenden Komponenten:
(a) 3,15 Teile Thiaalkanol B und
(b) 0,22 Teile eines Polyglycerinesters, der erhältlich ist durch vollständige Veresterung eines Polyglyceringemisches aus 27 % Diglycerin, 44 % Triglycerin, 19 % Tetraglycerin und 10 % höher kondensierten Polyglycerinen mit Behensäure.

Die wasserphase bestand aus:
10,6 Teilen einer 0,4 %igen Lösung eines hochmolekularen anionischen Polyacrylamids (Molmasse > 1 Mio),
0,03 Teilen einer 45 %igen wässrigen Lösung des Na-Salzes eines Acrylsäure-Homopolymers mit einer mittleren Molmasse von 2 500, sowie
0,12 Teilen einer 35 %igen wässrigen Lösung eines Acrylsäure-Homopolymers mit einer mittleren Molmasse von 100 000.

Die Komponenten (a) und (b) wurden zunächst bis auf eine Temperatur von 90°C erhitzt und dann in die 95°C heiße wässrige Phase unter hoher Scherung mit der Sonotrode während ½, 1, 1 ½ und 2 Minuten und einer Leistung von 20 % einemulgiert und sofort mit einem Eisbad auf RT abgekühlt. Die Eigenschaften der so erhältlichen Dispersionen sind in Tabelle 2 wiedergegeben.

### Beispiel 12

Mit Hilfe einer Ultraschallsonde vom Typ UP 400 s der Dr. Hielscher GmbH wurde eine Öl-in-Wasser-Dispersion hergestellt, bei der die Ölphase zu 23,8 Gew.-% am Aufbau der Dispersion beteiligt war und eine mittlere Teilchengröße von 0,4 bis 15 µm hatte. Die Ölphase bestand aus folgenden Komponenten:
(a) 3,15 Teile Thiaalkanol B und
(b) 0,22 Teile eines Polyglycerinesters, der durch vollständige Veresterung eines Polyglyceringemisches aus 27 % Diglycerin, 44 % Triglycerin, 19 % Tetraglycerin und 10 % höher kondensierten Polyglycerinen mit Behensäure hergestellt wurde.

Die Wasserphase bestand aus :
10,6 Teilen einer 0,4 %igen Lösung eines hochmolekularen anionischen Polyacrylamids (Molmasse > 1 Mio), und 0,15 Teilen einer 40 %igen wässrigen Lösung des Na-Salzes eines Acrylsäure-Homopolymers mit einer des Na-Salzes mittleren Molmasse von 30 000.

Die Komponenten (a) und (b) wuden zunächst bis auf eine Temperatur von 90°C erhitzt und dann in die 95°C heiße wässrige Phase unter hoher Scherung mit der Sonotrode während 1 Minute und einer Leistung von 20 % einemulgiert und sofort mit einem Eisbad auf RT abgekühlt. Die Eigenschaften der so erhältlichen Dispersion sind in Tabelle 2 wiedergegeben.

### Beispiel 13

Mit Hilfe einer Ultraschallsonde vom Typ UP 400 s der Dr. Hielscher GmbH wurde eine Öl-in-Wasser-Dispersion hergestellt, bei der die Ölphase zu 23,8 Gew.-% am Aufbau der Dispersion beteiligt war und eine mittlere Teilchengröße von 0,6 bis 10 µm hatte.

Die Ölphase bestand aus folgenden Komponenten:
(a) 3,15 Teile Thiaalkanol B und
(b) 0,22 Teile eines Polyglycerinesters, der durch vollständiges Verestern eines Polyglyceringemisches aus 27 % Diglycerin, 44 % Triglycerin, 19 % Tetraglycerin und 10 % höher kondensierten Polyglycerinen mit Behensäure hergestellt wurde.

Die Wasserphase bestand aus:
10,6 Teilen einer 0,4 %igen Lösung eines hochmolekularen anionischen Polyacrylamids (Molmasse > 1 Mio) und 0,15 Teilen einer 35 %igen wässrigen Lösung eines Acrylsäure-Homopolymers mit einer mittleren Molmasse von 250 000.

Die Komponenten (a) und (b) wurden zunächst bis auf eine Temperatur von 90°C erhitzt und dann in die 95°C heiße wässrige Phase unter hoher Scherung mit der Sonotrode während 1 Minute und einer Leistung von 20 % einemulgiert und sofort in einem Eisbad auf RT abgekühlt. Die Eigenschaften der so erhältlichen Dispersion sind in Tabelle 2 wiedergegeben.

### Beispiel 14

Mit Hilfe einer Ultraschallsonde vom Typ UP 400 s der Dr. Hielscher GmbH wurde eine Öl-in-Wasser-Dispersion hergestellt, bei der die Ölphase zu 23,8 Gew.-% am Aufbau der Dispersion beteiligt war und eine mittlere Teilchengröße von 0,4 bis 10 µm hatte. Die Ölphase bestand aus folgenden Komponenten:
(a) 3,15 Teile Thiaalkanol B
(b) 0,22 Teile eines Polyglycerinesters, der erhältlich ist durch vollständiges Verestern eines Polyglyceringemisches aus 27 % Diglycerin, 44 % Triglycerin, 19 % Tetraglycerin und 10 % höher kondensierten Polyglycerinen mit Behensäure.

Die Wasserphase bestand aus:
10,6 Teilen einer 0,4 %igen Lösung eines hochmolekularen anionischen Polyacrylamids (Molmasse > 1 Mio),
0,15 Teilen einer 35 %igen wässrigen Lösung eines Acrylsäure-Homopolymers mit einer mittleren Molmasse von 100 000 sowie
0,75 Teilen eines Polyethylenglykols der Molmasse 9 000.

Die Komponenten (a) und (b) wurden zunächst bis auf eine Temperatur von 90°C erhitzt und dann in die 95°C heiße wässrige Phase unter hoher Scherung mit der Sonotrode während 1 Minute und einer Leistung von 20 % Minuten einemulgiert und sofort in einem Eisbad auf Raumtemperatur abgekühlt. Die physikalischen Eigenschaften der so hergestellten Dispersion sind in der Tabelle 2 wiedergegeben.

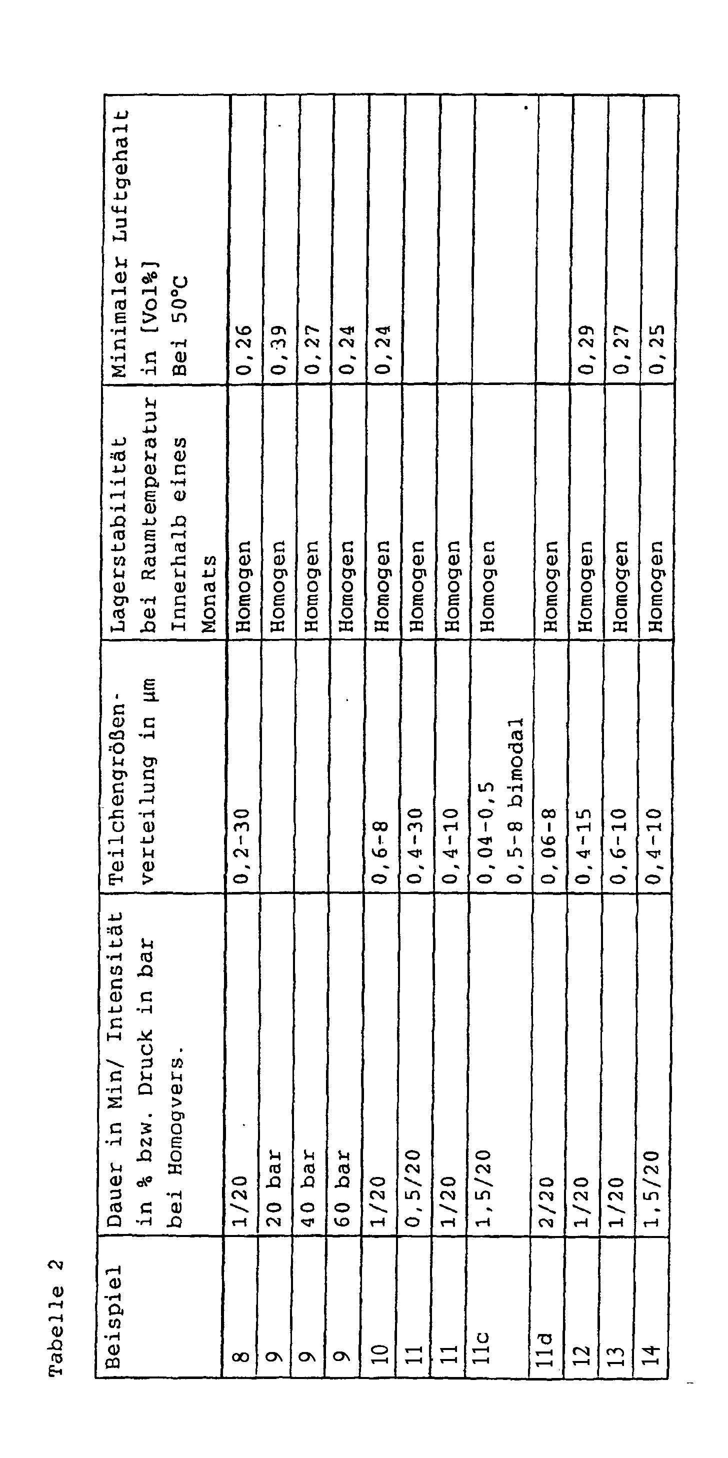

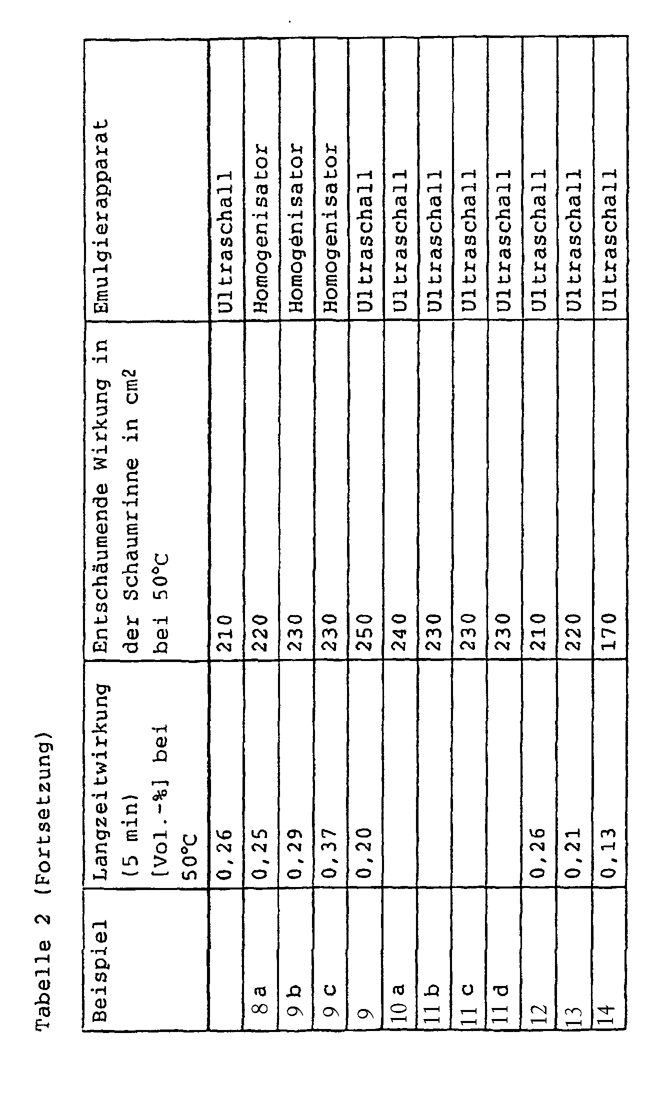

## Patentansprüche

1. Entschäumer und/oder Entlüfter auf Basis von Öl-in-Wasser-Dispersionen, die in der dispergierten hydrophoben Phase mindestens eine als Entschäumer und/oder Entlüfter wirksame Verbindung und gegebenenfalls weitere Bestandteile enthalten, **dadurch gekennzeichnet, daß** die hydrophobe Phase 3-Thiaalkan-1-ole, 3-Thiaoxid-alkan-1-ole, 3-Thiadioxid-alkan-1-ole, Ester der genannten Verbindungen oder deren Mischungen als entschäumend und/oder entlüftend wirksame Verbindungen enthält.

2. Entschäumer und/oder Entlüfter nach Anspruch 1, **dadurch gekennzeichnet, daß** die hydrophobe Phase
(a) 3-Thiaalkan-1-ole, 3-Thia-oxid-alkan-1-ole, 3-Thiadioxidalkan-1-ole, Ester der genannten Verbindungen oder deren Mischungen und
(b) mindestens eine Verbindung aus der Gruppe der Glycerinester von Fettsäuren mit mindestens 10 C-Atomen im Molekül, C₁₂- bis C₃₀-Alkohole, alkoxylierte Alkohole, Ester aus Zuckeralkoholen mit mindestens 4 OH-Gruppen oder mindestens 2 OH-Gruppen und mindestens einer intramolekularen Etherbindung und einer Fettsäure mit mindestens 20 C-Atomen im Molekül, Fettsäureester von C₁₂- bis C₂₂-Carbonsäuren mit 1- bis 3-wertigen Alkoholen, Ketone mit Schmelzpunkten oberhalb von 45°C, der Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind, Umsetzungsprodukte von Mono- und Diglyceriden mit Dicarbonsäuren, mit mindestens einer C₁₂- bis C₃₆-Fettsäure veresterte Umsetzungsprodukte von Glycerin mit Dicarbonsäuren, Polyethylenwachse, natürliche Wachse, Kohlenwasserstoffe mit Siedepunkten oberhalb von 200°C, feinteiligen inerte Feststoffe und Mischungen der genannten Verbindungen
enthält.

3. Entschäumer und/oder Entlüfter nach Anspruch 1 oder 2, **dadurch gekennzeichnet, daß** die hydrophobe Phase
(a) 3-Thiaalkan-1-ole, 3-Thiaoxid-alkan-1-ole, 3-Thiadioxidalkan-1-ole, Carbonsäureester der genannten Verbindungen oder deren Mischungen,
(b1) Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind, und
(b2) Glycerinester von Fettsäuren mit mindestens 10 C-Atomen im Molekül, C₁₂- bis C₃₀-Alkohole, alkoxylierte Alkohole, Ester aus Zuckeralkoholen mit mindestens 4 OH-Gruppen oder mindestens 2 OH-Gruppen und mindestens einer intramolekularen Etherbindung und einer Fettsäure mit mindestens 20 C-Atomen im Molekül, Fettsäureester von C₁₂- bis C₂₂-Carbonsäuren mit 1- bis 3-wertigen Alkoholen, Ketone mit Schmelzpunkten oberhalb von 45°C, Umsetzungsprodukte von Mono- und Diglyceriden mit Dicarbonsäuren, mit mindestens einer C₁₂- bis C₃₆-Fettsäure veresterte umsetzungsprodukte von Glycerin mit Dicarbonsäuren, Polyethylenwachse, natürliche Wachse, Kohlenwasserstoffe mit Siedepunkten oberhalb von 200°C, feinteilige inerte Feststoffe und Mischungen der genannten Verbindungen enthält.

4. Entschäumer und/oder Entlüfter nach einem der Ansprüche 1 bis 3, **dadurch gekennzeichnet, daß** sie nichtionische, anionische, amphotere und/oder kationische Emulgatoren als Stabilisator enthalten.

5. Entschäumer und/oder Entlüfter nach einem der Ansprüche 1 bis 4, **dadurch gekennzeichnet, daß** sie 0,1 bis 3 Gew.-% eines Säuregruppen aufweisenden, wasserlöslichen, amphiphilen Copolymerisats und/oder eines wasserlöslichen Salzes davon als Stabilisator enthalten.

6. Entschäumer und/oder Entlüfter nach einem der Ansprüche 1 bis 4, **dadurch gekennzeichnet, daß** sie als Stabilisator B 0,1 bis 3 Gew.-%, bezogen auf die Öl-in-Wasser-Dispersionen, mindestens eines
- Polymerisats von monoethylenisch ungesättigten Säuren mit Molmassen von 1 500 bis 300 000,
- Pfropfpolymerisats von 5 bis 40 Gew.-Teilen N-Vinylformamid auf 100 Gew.-Teilen eines Polyalkylenglykols mit einer Molmasse von 500 bis 10 000,
- zwitterionischen Polyalkylenpolyamins,
- zwitterionischen Polyethylenimins,
- zwitterionischen Polyetherpolyamins oder
- zwitterionischen vernetzten Polyalkylenpolyamins
enthalten.

7. Entschäumer und/oder Entlüfter nach Anspruch 6, **dadurch gekennzeichnet, daß** sie als Stabilisator (B) Homopolymerisate der Acrylsäure, Homopolymerisate der Methacrylsäure, Copolymerisate aus Acrylsäure und Methacrylsäure, Copolymerisate aus Acrylsäure und Maleinsäure, Copolymerisate aus Methacrylsäure und Maleinsäure, Polyvinylsulfonsäure, Polyacrylamido-2-methylpropansulfonsäure oder deren Alkalimetall- und Ammoniumsalze mit Molmassen von 1 500 bis 300 000 enthalten.

8. Entschäumer und/oder Entlüfter nach einem der Ansprüche 1 bis 7, **dadurch gekennzeichnet, daß** die hydrophobe Phase 1 bis 100 Gew.-% eines 3-Thiaalkan-1-ols, 3-Thiaoxid-alkan-1-ols, 3-Thiadioxid-alkan-1-ols, Ester der genannten Verbindungen mit C₁- bis C₃₀-Carbonsäuren oder deren Mischungen enthält.

9. Entschäumer und/oder Entlüfter nach einem der Ansprüche 1 bis 7, **dadurch gekennzeichnet, daß** die hydrophobe Phase 5 bis 75 Gew.-% eines 3-Thia-C₁₆ bis C₃₀-alkan-1-ols, 3-Thiaoxid-C₁₆ bis C₃₀-alkan-1-ols, 3-Thiadioxid-C₁₆-bis C₃₀-alkan-1-ols, Ester der genannten Verbindungen mit C₁- bis C₃₀-Carbonsäuren oder deren Mischungen enthält.

10. Entschäumer und/oder Entlüfter nach einem der Ansprüche 1 bis 9, **dadurch gekennzeichnet, daß** die hydrophobe Phase 5 bis 70 Gew.-% eines 3-Thia-C₁₈- bis C₂₈-alkan-1-ols enthält.

11. Verwendung von 3-Thiaalkan-1-olen, 3-Thiaoxid-alkan-1-olen, 3-Thiadioxid-alkan-1-olen, Ester der genannten Verbindungen mit C₁- bis C₃₀-Carbonsäuren oder deren Mischungen als entschäumend und/oder entlüftend wirkende Komponente in Entschäumern und/oder Entlüftern auf der Basis von Öl-in-Wasser-Dispersionen.

12. Verwendung nach Anspruch 11, **dadurch gekennzeichnet, daß** die in der Öl-Phase 3-Thiaalkan-1-ole, 3-Thiaoxid-alkan-1-ole, 3-Thiadioxid-alkan-1-ole, Ester der genannten Verbindungen oder deren Mischungen mit
- Polymerisaten monoethylenisch ungesättigter Säuren mit Molmassen von 1 500 bis 300 000,
- Pfropfpolymerisaten von 5 bis 40 Gew.-Teilen N-Vinylformamid auf 100 Gew.-Teilen eines Polyalkylenglykols mit einer Molmasse von 500 bis 10 000,
- zwitterionischen Polyalkylenpolyaminen,
- zwitterionischen Polyethyleniminen,
- zwitterionischen Polyetherpolyamins oder
- zwitterionischen vernetzten Polyalkylenpolyaminen
stabilisiert sind.

13. Verwendung nach Anspruch 12, **dadurch gekennzeichnet, daß** man als Stabilisator Homopolymerisate der Acrylsäure, Homopolymerisate der Methacrylsäure, Copolymerisate aus Acrylsäure und Methacrylsäure, Copolymerisate aus Acrylsäure und Maleinsäure, Copolymerisate aus Methacrylsäure und Maleinsäure, Polyvinylsulfonsäure, Polyacrylamido-2-methylpropansulfonsäure oder deren Alkalimetall- und Ammoniumsalze mit Molmassen von 1 500 bis 300 000 einsetzt.

14. Verwendung nach einem der Ansprüche 11-13, **dadurch gekennzeichnet, daß** man die Entschäumer und/oder Entlüfter bei der Papierherstellung, der Zellstoffkochung, der Zellstoffwäsche, der Mahlung von Papierstoff und der Dispergierung von Pigmenten für die Papierherstellung zum Entschäumen und/oder Entlüften der wäßrigen Medien einsetzt.

15. Verwendung nach einem der Ansprüche 11-13, **dadurch gekennzeichnet, daß** man die Entschäumer und/oder Entlüfter bei der Masse- und Oberflächenleimung von Papier einsetzt.

16. Verwendung nach einem der Ansprüche 11-13, **dadurch gekennzeichnet, daß** man die Entschäumer und/oder Entlüfter bei der Papierherstellung in wäßrigen Systemen verwendet, deren Temperatur oberhalb von 40°C liegt.

## Claims

1. An antifoam and/or deaerater based on an oil-in-water dispersion which contains, in the dispersed hydrophobic phase, at least one compound effective as an antifoam and/or deaerater and, if required, further components, wherein the hydrophobic phase contains 3-thiaalkan-1-ols, 3-thiaoxoalkan-1-ols, 3-thiadioxoalkan-1-ols, esters of said compounds or mixtures thereof as compounds having an antifoam and/or deaerating effect.

2. An antifoam and/or deaerater as claimed in claim 1, wherein the hydrophobic phase contains
(a) 3-thiaalkan-1-ols, 3-thiaoxoalkan-1-ols, 3-thiadioxoalkan-1-ols, esters of said compounds or mixtures thereof and
(b) at least one compound from the group consisting of the glyceryl esters of fatty acids having at least 10 carbon atoms in the molecule, C₁₂- to C₃₀-alcohols, alkoxylated alcohols, esters of sugar alcohols having at least 4 OH groups or at least 2 OH groups and at least one intramolecular ether bond and of a fatty acid having at least 20 carbon atoms in the molecule, fatty esters of C₁₂- to C₂₂-carboxylic acids with monohydric to trihydric alcohols, ketones having melting points above 45°C, the polyglyceryl esters which are obtainable by at least 20% esterification of polyglyceryl esters which have at least 2 glycerol units with at least one C₁₂- to C₃₆ fatty acid, reaction products of mono- and diglycerides with dicarboxylic acids, reaction products of glycerol with dicarboxylic acids, which reaction products are esterified with at least one C₁₂- to C₃₆-fatty acid, polyethylene waxes, natural waxes, hydrocarbons having boiling points above 200°C, finely divided inert solids and mixtures of said compounds.

3. An antifoam and/or deaerater as claimed in claim 1 or 2, wherein the hydrophobic phase contains
(a) 3-thiaalkan-1-ols, 3-thiaoxoalkan-1-ols, 3-thiadioxoalkan-1-ols, carboxylic esters of said compounds or mixtures thereof,
(b1)polyglyceryl esters which are obtainable by at least 20% esterification of polyglycerols which have at least 2 glycerol units with at least one C₁₂- to C₃₆-fatty acid and
(b2)glyceryl esters of fatty acids having at least 10 carbon atoms in the molecule, C₁₂- to C₃₀-alcohols, alkoxylated alcohols, esters of sugar alcohols having at least 4 OH groups or at least 2 OH groups and at least one intramolecular ether bond and of a fatty acid having at least 20 carbon atoms in the molecule, fatty esters of C₁₂- to C₂₂-carboxylic acids with monohydric to trihydric alcohols, ketones having melting points above 45°C, reaction products of mono- and diglycerides with dicarboxylic acids, reaction products of glycerol with dicarboxylic acids, which reaction products are esterified with at least one C₁₂- to C₃₆-fatty acid, polyethylene waxes, natural waxes, hydrocarbons having boiling points above 200°C, finely divided inert solids and mixtures of said compounds.

4. An antifoam and/or deaerater as claimed in any of claims 1 to 3, which contains nonionic, anionic, amphoteric and/or cationic emulsifiers as stabilizer.

5. An antifoam and/or deaerater as claimed in any of claims 1 to 4, which contains from 0.1 to 3% by weight of a water-soluble, amphiphilic copolymer having acid groups and/or of a water-soluble salt thereof as a stabilizer.

6. An antifoam and/or deaerator as claimed in any of claims 1 to 4, which contains, as stabilizer B, from 0.1 to 3% by weight, based on the oil-in-water dispersions, of at least one
- polymer of monoethylenically unsaturated acids having molar masses of from 1500 to 300,000,
- graft polymer of from 5 to 40 parts by weight of N-vinylformamide per 100 parts by weight of a polyalkylene glycol having a molar mass of from 500 to 10,000,
- zwitterionic polyalkylene polyamine,
- zwitterionic polyethyleneimine,
- zwitterionic polyetherpolyamine or
- zwitterionic crosslinked polyalkylenepolyamine.

7. An antifoam and/or deaerator as claimed in claim 6, which contains, as stabilizer (B), homopolymers of acrylic acid, homopolymers of methacrylic acid, copolymers of acrylic acid and methacrylic acid, copolymers of acrylic acid and maleic acid, copolymers of methacrylic acid and maleic acid, polyvinylsulfonic acid, polyacrylamido-2-methylpropanesulfonic acid or their alkali metal and ammonium salts having molar masses of from 1500 to 300,000.

8. An antifoam and/or deaerater as claimed in any of claims 1 to 7, wherein the hydrophobic phase contains from 1 to 100% by weight of a 3-thiaalkan-1-ol, of a 3-thiaoxoalkan-1-ol, of a 3-thiadioxoalkan-1-ol, of esters of said compounds with C₁- to C₃₀-carboxylic acids or of mixtures thereof.

9. An antifoam and/or deaerater as claimed in any of claims 1 to 7, wherein the hydrophobic phase contains from 5 to 75% by weight of a 3-thia-C₁₆ to C₃₀-alkan-1-ol, of a 3-thiaoxo-C₁₆ to C₃₀-alkan-1-ol, of a 3-thiadioxo-C₁₆- to C₃₀-alkan-1-ol, of esters of said compounds with C₁- to C₃₀-carboxylic acids or of mixtures thereof.

10. An antifoam and/or deaerater as claimed in any of claims 1 to 9, wherein the hydrophobic phase contains from 5 to 70% by weight of a 3-thia-C₁₈- to C₂₈-alkan-1-ol.

11. The use of 3-thiaalkan-1-ols, 3-thiaoxoalkan-1-ols, 3-thiadioxoalkan-1-ols, esters of said compounds with C₁- to C₃₀-carboxylic acids or mixtures thereof as components having an antifoam and/or deaerating effect in antifoams and/or deaeraters based on oil-in-water dispersions.

12. The use as claimed in claim 11, wherein the 3-thiaalkan-1-ols, 3-thiaoxoalkan-1-ols, 3-thiadioxoalkan-1-ols, esters of said compounds or mixtures thereof contained in the oil phase are stabilized with
- monoethylenically unsaturated acids having molar masses of from 1500 to 300,000,
- graft polymers of from 5 to 40 parts by weight of N-vinylformamide per 100 parts by weight of a polyalkylene glycol having a molar mass of from 500 to 10,000,
- zwitterionic polyalkylenepolyamines,
- zwitterionic polyethyleneimines,
- zwitterionic polyetherpolyamines or
- zwitterionic crosslinked polyalkylenepolyamines.

13. The use as claimed in claim 12, wherein the stabilizers used are homopolymers of acrylic acid, homopolymers of methacrylic acid, copolymers of arylic acid and methacrylic acid, copolymers of acrylic acid and maleic acid, copolymers of methacrylic acid and maleic acid, polyvinylsulfonic acid, polyacrylamido-2-methylpropanesulfonic acid or their alkali metal and ammonium salts having molar masses of 1500 to 300,000.

14. The use as claimed in any of claims 11-13, wherein the antifoam and/or deaerater are used for defoaming and/or deaerating the aqueous media in paper making, in pulp cooking, in pulp washing, in the beating of paper stock and in the dispersion of pigments for paper making.

15. The use as claimed in any of claims 11-13, wherein the antifoam and/or deaerater are used in the engine sizing and surface sizing of paper.

16. The use as claimed in any of claims 11-13, wherein the antifoam and/or deaerater are used in paper making, in aqueous systems whose temperature is above 40°C.

## Revendications

1. Antimousses et/ou désaérateurs à base de dispersions huile dans l'eau, contenant dans la phase hydrophobe dispersée au moins un composé actif en tant qu'antimousse et/ou désaérateur et éventuellement d'autres constituants, **caractérisé en ce que** la phase hydrophobe contient des 3-thia-alcan-1-ols, des 3-thiaoxyde-alcan-1-ols, des 3-thiadioxyde-alcan-1-ols, des esters des composés cités ou leurs mélanges, comme composés actifs en tant qu'antimousses ou désaérateurs.

2. Antimousses et/ou désaérateurs selon la revendication 1, **caractérisés en ce que** la phase hydrophobe contient
(a) des 3-thia-alcan-1-ols, des 3-thia-oxyde-alcan-1-ols, des 3-thiadioxyde-alcan-1-ols, des esters des composés cités ou leurs mélanges, et
(b) au moins un composé du groupe des esters glycéroliques d'acides gras comportant au moins 10 atomes de C par molécule, d'alcools en C₁₂ à C₃₀, d'alcools alcoxylés, des esters d'alcools de sucres comportant au moins 4 groupes OH ou au moins 2 groupes OH et au moins une liaison éther intramoléculaire, et d'un acide gras comportant au moins 20 atomes de C par molécule, des esters d'acides gras d'acides carboxyliques en C₁₂ à C₂₂ avec des alcools mono- à trivalents, des cétones ayant un point de fusion supérieur à 45°C, les poly(esters glycéroliques) que l'on peut obtenir par estérification à au moins 20% de polyglycérols présentant au moins 2 unités glycérol, avec au moins un acide gras en C₁₂ à C₃₆, des produits de réaction de mono- et diglycérides avec des acides carboxyliques, des produits de réaction, estérifiés avec au moins un acide gras en C₁₂ à C₃₆, de glycérol avec des acides dicarboxyliques, des cires de polyéthylène, des cires naturelles, des hydrocarbures ayant des points d'ébullition supérieurs à 200°C, des solides inertes finement divisés et des mélanges des composés cités.

3. Antimousses et/ou désaérateurs selon la revendication 1 ou 2, **caractérisés en ce que** la phase hydrophobe contient
(a) des 3-thia-alcan-1-ols, des 3-thia-oxyde-alcan-1-ols, des 3-thiadioxyde-alcan-1-ols, des esters des composés cités ou leurs mélanges,
(b1) des poly(esters glycéroliques) que l'on peut obtenir par estérification à au moins 20% de polyglycérols présentant au moins 2 unités glycérol, avec au moins un acide gras en C₁₂ à C₃₆, et
(b2) des esters glycéroliques d'acides gras comportant au moins 10 atomes de C par molécule, d'alcools en C₁₂ à C₃₀, d'alcools alcoxylés, des esters d'alcools de sucres comportant au moins 4 groupes OH ou au moins 2 groupes OH et au moins une liaison éther intramoléculaire, et d'un acide gras comportant au moins 20 atomes de C par molécule, des esters d'acides gras d'acides carboxyliques en C₁₂ à C₂₂ avec des alcools mono- à trivalents, des cétones ayant un point de fusion supérieur à 45°C, des produits de réaction de mono- et diglycérides avec des acides carboxyliques, des produits de réaction, estérifiés avec au moins un acide gras en C₁₂ à C₃₆, de glycérol avec des acides dicarboxyliques, des cires de polyéthylène, des cires naturelles, des hydrocarbures ayant des points d'ébullition supérieurs à 200°C, des solides inertes finement divisés et des mélanges des composés cités.

4. Antimousses et/ou désaérateurs selon l'une quelconque des revendications 1 à 3, **caractérisés en ce qu'**ils contiennent des émulsifiants non ioniques, anioniques, amphotères et/ou cationiques en tant que stabilisants.

5. Antimousses et/ou désaérateurs selon l'une quelconque des revendications 1 à 4, **caractérisés en ce qu'**ils contiennent de 0,1 à 3% en poids d'un copolymère amphiphile soluble dans l'eau présentant des groupes acides et/ou un sel de celui-ci soluble dans l'eau, en tant que stabilisant.

6. Antimousses et/ou désaérateurs selon l'une quelconque des revendications 1 à 4, **caractérisés en ce qu'**ils contiennent en tant que stabilisant B de 0,1 à 3% en poids, par rapport aux dispersions huile dans l'eau, d'au moins
- un polymère d'acides monoéthyléniquement insaturés ayant une masse molaire de 1.500 à 300.000,
- un copolymère greffé de 5 à 40 parties en poids de N-vinylformamide sur 100 parties en poids d'un polyalkylène glycol d'une masse molaire de 500 à 10.000,
- une polyalkylène polyamine zwittérionique,
- une polyéthylène imine zwittérionique,
- une polyéther polyamine zwittérionique ou
- une polyalkylène polyamine zwittérionique réticulée.

7. Antimousses et/ou désaérateurs selon la revendication 6, **caractérisés en ce qu'**ils contiennent en tant que stabilisant (B) des homopolymères d'acide acrylique, des homopolymères d'acide méthacrylique, des copolymères d'acide acrylique et d'acide méthacrylique, des copolymères d'acide méthacrylique et d'acide maléique, du poly(acide vinylsulfonique), du poly(acide acrylamido-2-méthylpropane-sulfonique) ou leurs sels de métaux alcalins et d'ammonium, ayant des masses molaires de 1.500 à 300.000.

8. Antimousses et/ou désaérateurs selon l'une quelconque des revendications 1 à 7, **caractérisés en ce que** la phase hydrophobe contient de 1 à 100% en poids d'un 3-thia-alcan-1-ol, d'un 3-thia-oxyde-alcan-1-ol, d'un 3-thiadioxyde-alcan-1-ol, d'esters des composés cités avec des acides carboxyliques en C₁ à C₃₀, ou leurs mélanges.ou leurs mélanges.

9. Antimousses et/ou désaérateurs selon l'une quelconque des revendications 1 à 7, **caractérisés en ce que** la phase hydrophobe contient de 5 à 75% en poids d'un 3-thia-(C₁₆ à C₃₀)alcan-1-ol, d'un 3-thia-oxyde-(C₁₆ à C₃₀) alcan-1-ol, d'un 3-thiadioxyde-(C₁₆ à C₃₀)alcan-1-ol, d'esters des composés cités avec des acides carboxyliques en C₁ à C₃₀, ou leurs mélanges.

10. Antimousses et/ou désaérateurs selon l'une quelconque des revendications 1 à 9, **caractérisés en ce que** la phase hydrophobe contient de 5 à 70% en poids d'un 3-thia-(C₁₈ à C₂₈)alcan-1-ol.

11. Utilisation de 3-thia-alcan-1-ols, 3-thia-oxyde-alcan-1-ols, 3-thiadioxyde-alcan-1-ols, d'esters des composés cités avec des acides carboxyliques en C₁ à C₃₀, ou leurs mélanges, comme composés à activité d'antimousses et/ou de désaérateurs dans des antimousses et/ou désaérateurs à base de dispersions huile dans l'eau.

12. Utilisation selon la revendication 11, **caractérisée en ce que** les 3-thia-alcan-1-ols, 3-thia-oxyde-alcan-1-ols, 3-thiadioxyde-alcan-1-ols, les esters des composés cités ou leurs mélanges, sont stabilisés par
- des polymères d'acides monoéthyléniquement insaturés ayant des masses molaires de 1.500 à 300.000,
- des copolymères greffés de 5 à 40 parties en poids de N-vinylformamide sur 100 parties en poids d'un polyalkylène glycol d'une masse molaire de 500 à 10.000,
- des polyalkylène polyamines zwittérioniques,
- des polyéthylène imines zwittérioniques,
- des polyéther polyamines zwittérioniques ou
- des polyalkylène polyamines zwittérioniques réticulées.

13. Utilisation selon la revendication 12, **caractérisée en ce que** l'on met en oeuvre comme stabilisants des homopolymères d'acide acrylique, des homopolymères d'acide méthacrylique, des copolymères d'acide acrylique et d'acide méthacrylique, des copolymères d'acide méthacrylique et d'acide maléique, du poly(acide vinylsulfonique), du poly(acide acrylamido-2-méthylpropane-sulfonique) ou leurs sels de métaux alcalins et d'ammonium, ayant des masses molaires de 1.500 à 300.000.

14. Utilisation selon l'une quelconque des revendications 11 à 13, **caractérisée en ce que** l'on met en oeuvre les antimousses et/ou désaérateurs dans la fabrication du papier, le débouillissage de la cellulose, le lavage de la cellulose, le broyage de la pâte à papier et la dispersion de pigments pour la fabrication du papier, pour le démoussage et/ou la désaération des milieux aqueux.

15. Utilisation selon l'une quelconque des revendications 11 à 13, **caractérisée en ce que** l'on met en oeuvre les antimousses et/ou désaérateurs dans l'encollage en masse ou en surface du papier.

16. Utilisation selon l'une quelconque des revendications 11 à 13, **caractérisée en ce que** l'on utilise les antimousses et/ou désaérateurs, dans la fabrication du papier, dans des systèmes aqueux dont la température est supérieure à 40°C.
